# EUROPEAN PATENT SPECIFICATION

(11) **EP 2 504 374 B1**
(45) Date of publication and mention of the grant of the patent: **27.07.2016**
(21) Application number: 10833623.1
(22) Date of filing: 25.11.2010
(51) Int. Cl.: C08G 59/50, C08L 63/00, C09D 5/34, C08J 5/24, C09D 5/16

(54) **WATER CURABLE RESIN FORMULATIONS**
WASSERHÄRTBARE HARZFORMULIERUNGEN
FORMULATIONS DE RÉSINE DURCISSABLE PAR L'EAU

(30) Priority: 25.11.2009 MY PI20095026
(43) Date of publication of application: 03.10.2012
(73) Proprietor: Petroliam Nasional Berhad (PETRONAS), 50088 Kuala Lumpur (MY)
(72) Inventor: LEONG, Kok, Hoong, 43000 Kajang, Selangor (MY); LEONG, Yin, Liong, 43000 Kajang, Selangor (MY); TIAN, Wendy, Wenjun, Clayton, Victoria 3168 (AU); HODGKIN, Jonathan, Howard, Arthurs Seat VIC 3936 (AU); GAO, Song, Clayton, Victoria 3168 (AU); KOZIELSKI, Karen, Anne, Clayton, Victoria 3168 (AU); WOOD, Colin, David, Clayton, Victoria 3168 (AU)
(74) Representative: RGTH
(86) International application number: PCT/MY2010/000291
(87) International publication number: WO 2011/065813

(56) References cited:
- WO-A1-97/44188
- WO-A1-03/093368
- AU-A1- 2008 324 608
- GB-A- 1 598 432
- JP-A- 10 045 877
- US-A- 5 087 154
- US-A- 5 942 073
- US-A- 6 005 060
- US-A1- 2004 070 109
- US-A1- 2007 104 960
- US-A1- 2007 104 960
- US-A1- 2008 017 070
- US-A1- 2010 244 279
- DATABASE CAPLUS [Online] CHEMICAL ABSTRACTS SERVICE, COLUMBUS, OHIO, US; 10 June 2005 (2005-06-10), TAKENAKA, HIROYUKI ET AL: "Liquid epoxy resin compositions and semiconductor devices sealed therewith", XP002714353, retrieved from STN Database accession no. 2005:492550 -& JP 2005 146104 A (SHINETSU CHEMICAL CO) 9 June 2005 (2005-06-09)
- DATABASE WPI Derwent Publications Ltd., London, GB; AN 1988-009341, XP008159850 & JP 62 270668 A (NITTO ELECTRIC IND CO) 25 November 1987

## Description

### Technical Field

The present invention generally relates to resin formulations. More specifically, the present invention relates to epoxy resin formulations for use in the repair and/or maintenance of underwater structures. The present invention also relates to methods of preparing the epoxy resin formulations.

### Background

Underwater structures, such as oil and gas pipelines, can undergo deterioration over time or be damaged. If left untreated, deterioration and damage can result in rupture of the pipelines, which can lead to a substantial loss in revenue as well as pollution of the ocean with its hazardous contents. Conventional methods of repair, rehabilitation and maintenance of such underwater pipelines are mechanical based, and involve underwater welding which, in oil and gas environments, is not only time-consuming, dangerous and inconvenient but also requires highly skilled labor. A full production shut-down of the pipe is typically required, which results in extensive loss of revenue for oil and gas producers.

Other than mechanical methods, curable polymeric materials, such as adhesives and fibre reinforced composites have been used to repair underwater structures. However, these known materials have all required the water to be removed from the underwater structure prior to application of the materials to the underwater structure to effect the repair. Such a requirement would be difficult to meet in an underwater environment. Some of these known materials also do not have the adhesive strength required for underwater applications, resulting in short-term adhesive loss and poor durability.

It would be more preferable to be able to repair an underwater structure, such as a pipe, with a curable polymeric material because the repair and maintenance work is simplified, which results in a significant reduction in repair/rehabilitation/maintenance time and costs. The polymeric material can be applied to the pipeline such that the polymeric material conforms to the complex surface geometry of the pipeline structure. The quality and durability of repair, rehabilitation and maintenance using known curable polymeric materials depends on the quality of the bond formed between the polymeric material and the surface to which it is being adhered. However, none of the known curable polymeric materials are suitable for curing in an underwater environment.

One type of polymeric material used for repair, rehabilitation and maintenance of metallic underwater structures is epoxy resin. Epoxy resins form strong polar bonds with the surface of the metal substrate as well as with reinforcement fibres (such as glass, Kevlar and carbon). The epoxy group can also be attached to many different types of molecular structure, which enables design of resins with specific properties such as thermal stability, water resistance and toughness.

Commercial epoxy resin formulations typically include a curing agent (or hardener), which may be activated by heat or moisture. Aliphatic amine curing agents have been used as these require only short curing times at ambient temperature. However, while these curing agents may be practicable to repair underwater structures in a dry or wet environment, they are not suitable for use in underwater environments in which the curable polymeric material is submerged in water because aliphatic amine curing agents lack water resistance. Furthermore, underwater structures, such as oil and gas pipes, are often exposed to elevated temperatures (35°C to 110°C), which can be detrimental to epoxy materials cured with aliphatic amine hardeners. Secondly, these resin systems do not adhere well to wet surfaces, and are therefore unsuitable for underwater applications. Thirdly, aliphatic amines can react faster with water molecules than they do with the epoxy resin, resulting in the so called "amine blushing" phenomenon which leaves a waxy layer on the surface of the epoxy resin. "Amine blushing" interferes with the curing of the epoxy resin, resulting in an incomplete cure.

Cycloaliphatic amines have also been suggested as curing agents as these can react with epoxy resins at low temperatures but they suffer from the disadvantage in that they have high toxicity and also lack long term durability.

Other types of curing agents commonly used in epoxy resin formulations have been reported to be less stable underwater, highly toxic and/or lack long term durability. For example, carboxylic acid and anhydride curing agents, which are typically used for curing low-temperature epoxy resins, are more water soluble and less stable under all cure conditions.

Another problem with the application of polymeric materials in an underwater environment is the ingress of water, which can significantly reduce interfacial bonding between the polymeric material and its substrate as well as the bulk properties of the resin. Whilst hydrophobic materials, such as siloxane based compounds, can be added to an epoxy resin formulation to reduce or prevent ingress of water and thus improve the water repellent properties of the formulation, the glass transition temperature within the structural network in the epoxy resin may be reduced with addition of such hydrophobic materials. The glass transition temperature is the temperature at which the cured resin begins to change from a relatively strong, high modulus, hard, vitreous state to a low modulus, pliable, elastic state. Hence, a relatively high glass transition temperature will be necessary if it is intended that the cured resin be strong at relatively high temperatures, such as those encountered in underwater environments.

Yet another problem with the application of polymeric materials in an underwater environment is the leaching of relatively water soluble partially reacted intermediate materials if the curing reaction does not proceed to completion. At lower temperatures, a complete cure is almost never achieved, even with the use of reactive amine curing agents. This is because, increases in the viscosity of the epoxy resin during the curing reaction prevent the curing reaction from achieving completion. Incomplete curing reactions promote long-term polymer degradation reactions and loss of adhesion.

Some commercial epoxy resin formulations attempt to address some of the above problems by mixing the epoxy resin with a reactive amine material to increase the reactivity of the epoxy resin. However, this can potentially increase viscosity of the epoxy resin formulation before application to the substrate, causing reduced resin flow and reduced working time.

Most commercially available epoxy resin formulations comprise epoxy resin and aliphatic amine curing agents, and cure at ambient temperature. To improve bond durability, and hence the service life, application of a pre-treatment solution is typically necessary.

There is a need to provide an epoxy resin formulation with improved adhesion, pot life and durability properties, and that is non-toxic or has low toxicity, and that is capable of being used at high operational temperatures and pressures, for repair, rehabilitation and/or maintenance of underwater structures that overcomes, or at least ameliorates, one or more of the disadvantages described above.

There is a need to provide a fibre reinforced composite for use in repair, rehabilitation and/or maintenance of underwater structures that is capable of being applied with homogenous thickness and orientation in the low light and visibility underwater environment that overcomes, or at least ameliorates, one or more of the disadvantages described above.

### Summary

According to a first aspect, there is provided a water curable resin formulation comprising:
(a) an epoxy resin;
(b) an aromatic amine curing agent, wherein the molar ratio of amine functional groups in the curing agent relative to the epoxy functional groups of the epoxy resin is 2:1 or less; and
(c) a coupling agent comprising a siloxane group coupled to an epoxy reactive group.

Advantageously, the resin can be cured underwater to form a strong polymeric structure. As a rule of thumb, when a resin formulation, such as one containing the epoxy resin diglycidyl ether of bisphenol A (DGEBA), is cured at 80°C, the glass transition temperature is also expected to be 80°C ± 20°C. The glass transition temperature is related to the degree of cure and cross-linking in the structural network of a polymeric material, and hence, is reflective of the strength of the polymeric material. A relatively high glass transition temperature will be necessary if it is intended that the cured resin be strong at relatively high temperatures, such as those encountered in underwater environments. Advantageously, when being cured at 80°C, the use of an aromatic amine hardener in the resin formulation according to the first aspect results in the resin formulation exhibiting a glass transition temperature exceeding 120°C. This unexpectedly higher polymer strength is in contrast to resin formulations using aliphatic amine hardeners which, when being cured at 80°C, only exhibited a glass transition temperature of about 80°C.

Advantageously, the use of an aromatic amine hardener in the resin formulation according to the first aspect also improves the pot life of the resin formulation and provides superior bond strength to the resin formulation.

Advantageously, the molar ratio of amine functional groups in the curing agent relative to the epoxy functional groups of the epoxy resin is 2:1 or less to avoid leaching of the curing agent. When the molar ratio of the amine functional groups in the curing agent relative to the epoxy functional groups of the epoxy resin are present in excess of a molar ratio of 2:1, for example where the molar ratio exceeds 2:1, unreacted or partially reacted curing agents may leach from the epoxy resin polymer, causing long-term polymer degradation and loss of adhesion to the substrate.

Advantageously, the molar ratio of amine functional groups in the curing agent relative to the epoxy functional groups of the epoxy resin is at least 1:2 to effect curing of the resin formulation.

Advantageously, the molar ratio of amine functional groups in the curing agent relative to the epoxy functional groups of the epoxy resin is in the range of 7:10 to 9:10 to enable the resin formulation to cure effectively in water without resulting in leaching of the curing agent.

Advantageously, the curing agent may further comprise a cycloaliphatic amine. The use of a cycloaliphatic amine curing agent in addition to an aromatic amine curing agent results in a resin formulation that has improved glass transition temperatures, pot life and bond strength.

Advantageously, the coupling agent reacts at one end of the molecule with the epoxy resin and at the other end of the molecule with the substrate to result in enhanced adhesion of the resin formulation to the substrate and long-term durability.

Advantageously, the siloxane group of the coupling agent is a hydrolysable siloxane group.

Advantageously, the amount of coupling agent relative to the curing agent and epoxy resin is selected to enable the resin to be water curable.

The resin formulation may further comprise a hydrophobic agent capable of repelling water. The hydrophobic agent may comprise long-chain polysiloxane groups.

The epoxy resin may be present in an amount in the range of 50% to 90% weight of the total resin.

The cycloaliphatic amine curing agent may be present in an amount in the range of 5 % to 25 % weight of the total resin.

The aromatic amine curing agent may be present in an amount in the range of 5 % to 40% weight of the total resin.

Advantageously, the curing agent is present in an amount to enable the epoxy resin to cure with the coupling agent in the presence of water.

The coupling agent may be present in an amount in the range of 1 % to 30 % weight of the total resin.

The epoxy may be the major component of the resin.

The cycloaliphatic amine hardener may include primary or secondary amine groups. The cycloaliphatic amine hardener may include a diamine hardener. The cycloaliphatic diamine hardener may include carbon skeletons of five and six-member rings.

The aromatic amine hardener may include primary or secondary amine groups. Advantageously, the aromatic amine hardener includes a multifunctional amine hardener. Advantageously, the multifunctional amine hardener includes a diamine hardener. The aromatic diamine hardener may include five and six-member carbons in the aromatic ring.

In one embodiment, the coupling agent has the general formula:

R¹ₙSi(OR²)₄₋ₙ

wherein R¹ is selected from a group consisting of a substituted or unsubstituted monovalent group of 1 to 20 carbon atoms; R² is selected from the group consisting of hydrogen and a substituted or unsubstituted monovalent hydrocarbon group of 1 to 20 carbon atoms, and n is an integer from 0 to 3.

R¹ and R² may be substituted or unsubstituted monovalent hydrocarbon group of 1 to 8 carbon atoms.

The resin formulation may further comprise a moisture scavenger. Preferably the moisture scavenger is present in the form of micro-sized or nano-sized particles. The moisture scavenger nanoparticles may be comprised of an organosiloxane, preferably a tetraalkylorthosilicates such as tetramethylorthosilicates or tetraethylorthosilicates. Advantageously, the nanoparticle moisture scavenger absorbs moisture surrounding the resin formulation when the resin formulation is applied to the substrate, hence forming a protective layer which enhances the curing process of the epoxy resin.

A second aspect provides a putty composition comprising the curable resin of the first aspect and a filler in an amount at least sufficient to produce a paste-like consistency in the composition. The filler may comprise at least one of a mineral filler, organosiloxane or a mixture thereof. In one embodiment, the filler comprises nano-sized particles.

A third aspect provides a fibre reinforced composite, comprising a fibrous material impregnated with the resin formulation as defined in the first aspect.

The fibre reinforced composite may be selected from the group consisting of glass, polyaramid, graphite, silica, quartz, carbon, ceramic, Kevlar, basalt and polyethylene.

A fourth aspect provides a method of applying a protective layer to an underwater structure, comprising the step of directly coating the underwater structure with a resin formulation as defined in the first aspect.

A fifth aspect provides a method of applying a protective layer to an underwater structure, comprising the step of applying a fibre reinforced composite as defined in the third aspect to the underwater structure, such as an underwater pipeline.

In one embodiment, the underwater structure is generally elongate and the fibre reinforced composite is wound around the surface of the structure in a generally helical path relative to the longitudinal axis of the structure. The fibre reinforced composite may be applied along a helical path with at least 25% overlap of width of the fibre reinforced composite.

The fibre may have an indicia to indicate the position of the fibre with respect to the longitudinal axis.

A sixth aspect provides a fibre overwrap, comprising an elongated fibrous material having an indicia thereon to visually indicate the position of the orientation of the overwrap as it is being wrapped onto an underwater structure. The indicia may be fluorescent for viewing in a low light environment, such as at least 50 m underwater or where there is limited light (such as under an oil rig platform). In one embodiment, the indicia is disposed parallel to the longitudinal axis of the elongated fibrous material.

Advantageously, indicia disposed parallel to the longitudinal axis and/or between the edges of the elongated fibrous material provide a guide for the applicator when wrapping the fibre overwrap in a helical or spiral path along the length of an underwater structure. The applicator aligns an indicia disposed at the edge of the elongated fibrous material with an indicia disposed at mid-width of the elongated fibrous material as the fibre overwrap is being wrapped around the underwater structure, thereby producing a 0-50% width overlap. This provides dimensional stability to the fibre overwrap as the applicator applies tension to the fibre overwrap while wrapping it around the underwater structure, and reduces application time leading to shorter repair/maintenance time, ensures higher quality repair/maintenance leading to a lesser amount of materials used and ensures better occupational safety to applicators as they would not have to come into direct contact with the epoxy resin.

Advantageously, compared to conventional mechanical based methods, the application of a resin formulation as defined above or a fibre reinforced composite as defined above reduces repair/maintenance costs by an estimated 50-70%, improves safety because no naked flames are used, and removes the need to disengage the pipeline in need of repair/maintenance from the underwater pipeline system and hence minimizes or removes downtime from weeks to days.

### Definitions

The following words and terms used herein shall have the meaning indicated:
The term "water-curable" as used herein, is intended to include any material capable of being cross-linked or polymerized while being submerged and in contact with water.

The term "epoxy resin" is understood to mean any organic compound having at least two functional groups of oxirane type which can be polymerized by ring opening. The term "epoxy resin" denotes any conventional epoxy resin which is typically liquid at room temperature (23°C) or at a higher temperature. These epoxy resins can be monomeric or polymeric, on the one hand, and aliphatic, cycloaliphatic, heterocyclic or aromatic, on the other hand. Exemplary epoxy resins are resorcinol diglycidyl ether, bisphenol A diglycidyl ether, triglycidyl-p-amino-phenol, bromobisphenol F diglycidyl ether, the triglycidyl ether of m-amino-phenol, tetraglycidylmethylenedianiline, the triglycidyl ether of (trihydroxy-phenyl)methane, polyglycidyl ethers of phenol-formaldehyde novolak, polyglycidyl ethers of ortho-cresol novolak and tetraglycidyl ethers of tetraphenyl-ethane. Mixtures of at least two of these resins can also be used.

The term "siloxane" is known in the art and used herein to mean a straight or branched chain polymer containing -Si-O- repeating units in its backbone. Such -Si-O- units may or may not have other intermittent backbone structures.

The term "siloxane" when used in relation to a coupling agent refers to any siloxane with 1 to 50 -Si-O- repeating units.

The term "long-chain polysiloxane" in the context of this specification refers to any polysiloxane with more than 50 -Si-O- repeating units, typically with up to 1000 -Si-O- repeating units.

The term "cycloaliphatic" refers to any ringed structure having an adjacent aliphatic group. This includes monocycloaliphatic compounds and polycycloaliphatic compounds, as well as the cis- and trans-isomeric forms of such compounds. Exemplary cycloaliphatic compounds include cyclopentyl, methylcyclopentyl, dimethylcyclopentyl, ethenylmethyl-cyclopentyl, trimethylcyclopentenyl, cyclopentenyl, methylcyclopentenyl, cyclohexyl, methylcyclohexyl, dimethylcyclohexyl, trimethylcyclohexyl, ethylcyclohexyl, ethenylcyclohexyl, dimethylcyclohexenyl and tri-methylcyclohexenyl compounds.

The term "aromatic" refers to aromatic hydrocarbon groups and/or heterocyclic aromatic groups. Heterocyclic aromatic groups include those containing oxygen, nitrogen, or sulphur (e.g. groups derived from furan, pyrazole or thiazole). Aromatic groups can be monocyclic (e.g. benzene), bicyclic (e.g. naphthalene), or polycyclic (e.g. anthracene). Monocyclic aromatic groups include five-membered rings (such as those derived from pyrrole) or six-membered rings (such as those derived from pyridine). The aromatic groups may comprise fused aromatic groups comprising rings that share their connecting bonds.

Where the term "aromatic" is used in relation to amines, the term includes aromatic amines which are either unsubstituted or substituted on the aromatic nucleus. The amines can be primary or secondary amines. Where the aromatic amine has substituents on the aromatic nucleus, the substituents may be lower alkyl, lower alkoxy, hydroxy, halogen, alkylthio, mercapto, amino, mono(lower alkyl)amino and di(lower alkyl)amino.

The term "multifunctional" in the context of this specification means 2 or more functional groups. For example, when used in relation to an amine, "multifunctional" refers to a compound that comprises two or more amine functional groups. For example, a multifunctional amine may be a diamine (comprising two amine groups), a triamine (comprising three amine groups), a tetraamine (comprising four amine groups), or a pentaamine (comprising five amine groups).

The term "alkyl" includes within its meaning straight chain or branched chain saturated aliphatic groups having from 1 to 10 carbon atoms, eg, 1, 2, 3, 4, 5, 6, 7, 8, 9, or 10 carbon atoms. For example, the term alkyl includes, but is not limited to, methyl, ethyl, 1-propyl, isopropyl, 1-butyl, 2-butyl, isobutyl, tert-butyl, amyl, 1,2-dimethylpropyl, 1,1-dimethylpropyl, pentyl, isopentyl, hexyl, 4-methylpentyl, 1-methylpentyl, 2-methylpentyl, 3-methylpentyl, 2,2-dimethylbutyl, 3,3-dimethylbutyl, 1,2-dimethylbutyl, 1,3-dimethylbutyl, 1,2,2-trimethylpropyl, 1,1,2-trimethylpropyl, 2-ethylpentyl, 3-ethylpentyl, heptyl, 1-methylhexyl, 2,2-dimethylpentyl, 3,3-dimethylpentyl, 4,4-dimethylpentyl, 1,2-dimethylpentyl, 1,3-dimethylpentyl, 1,4-dimethylpentyl, 1,2,3-trimethylbutyl, 1,1,2-trimethylbutyl, 1,1,3-trimethylbutyl, 5-methylheptyl, 1-methylheptyl, octyl, nonyl, decyl, and the like.

The term "lower alkyl" refers to a straight or branched saturated hydrocarbon chain having 1, 2, 3, 4, 5, or 6 carbon atoms. This term is exemplified by groups such as methyl, ethyl, n-propyl, iso-propyl, n-butyl, iso-butyl, t-butyl, n-pentyl, n-hexyl, and the like.

The term "alkenyl" includes within its meaning straight or branched chain unsaturated aliphatic hydrocarbon groups having from 2 to 10 carbon atoms, e.g., 2, 3, 4, 5, 6, 7, 8, 9, or 10 carbon atoms and having at least one double bond, of either *E*, *Z, cis* or trans stereochemistry where applicable, anywhere in the alkyl chain. Examples of alkenyl groups include but are not limited to ethenyl, vinyl, allyl, 1-methylvinyl, 1-propenyl, 2-propenyl, 2-methyl-1-propenyl, 2-methyl-1-propenyl, 1-butenyl, 2-butenyl, 3-butentyl, 1,3-butadienyl, 1-pentenyl, 2-pentenyl, 3-pentenyl, 4-pentenyl, 1,3-pentadienyl, 2,4-pentadienyl, 1,4-pentadienyl, 3-methyl-2-butenyl, 1-hexenyl, 2-hexenyl, 3-hexenyl, 1,3-hexadienyl, 1,4-hexadienyl, 2-methylpentenyl, 1-heptenyl, 2-heptentyl, 3-heptenyl, 1-octenyl, 1-nonenyl, 1-decenyl, and the like.

The term "lower alkenyl" refers to a straight or branched saturated hydrocarbon chain having 2, 3, 4, 5, or 6 carbon atoms.

The term "alkynyl" as used herein includes within its meaning straight or branched chain unsaturated aliphatic hydrocarbon groups having from 2 to 10 carbon atoms and having at least one triple bond anywhere in the carbon chain. Examples of alkynyl groups include but are not limited to ethynyl, 1-propynyl, 1-butynyl, 2-butynyl, 1-methyl-2-butynyl, 3-methyl-1-butynyl, 1-pentynyl, 1-hexynyl, 1-methylpentynyl, 1-heptynyl, 2-heptynyl, 1-octynyl, 2-octynyl, 1-nonyl, 1-decynyl, and the like.

The term "lower alkynyl" refers to a straight or branched saturated hydrocarbon chain having 2, 3, 4, 5, or 6 carbon atoms.

The term "alkoxy" as used herein, means an alkyl group, as defined herein, appended to the parent molecular moiety through an oxygen atom. Representative examples of alkoxy include, but are not limited to, methoxy, ethoxy, propoxy, 2-propoxy, butoxy, tert-butoxy, pentyloxy, and hexyloxy.

The term "substituted" is intended to indicate that one or more (e.g., 1, 2, 3, 4, or 5; in some embodiments 1, 2, or 3; and in other embodiments 1 or 2) hydrogen atoms on the group indicated in the expression using "substituted" is replaced with a selection from the indicated organic or inorganic group(s), or with a suitable organic or inorganic group known to those of skill in the art, provided that the indicated atom's normal valency is not exceeded, and that the substitution results in a stable compound. Suitable indicated organic or inorganic groups include, e.g., alkyl, alkenyl, alkynyl, alkoxy, halo, haloalkyl, hydroxy, hydroxyalkyl, aryl, heteroaryl, heterocycle, cycloalkyl, alkanoyl, alkoxycarbonyl, amino, alkylamino, dialkylamino, trifluoromethylthio, difluoromethyl, acylamino, nitro, trifluoromethyl, trifluoromethoxy, carboxy, carboxyalkyl, keto, thioxo, alkylthio, alkylsulfinyl, alkylsulfonyl, alkylsilyl, and cyano. Additionally, the suitable indicated groups can include, e.g., -X, -R, -O-, -OR, -SR, -S-, -NR²,-NR³, =NR, -CX₃, -CN, -OCN, -SCN, -N=C=O, -NCS, -NO,-NO₂, =N₂, -N₃, NC(=O)R, -C(O)R, -C(=O)NRR-S(=O)₂O-, -S(=O)₂OH, -S(=O)₂R, -OS(=O)₂OR, -S(=O)₂NR, -S(=O)R,-OP(=O)O₂RR, -P(=O)O₂RR-P(=O)(O-)₂, -P(=O)(OH)₂,-C(=O)R, -C(=O)X, -C(S)R, -C(O)OR, -C(O)O-, -C(S)OR,-C(O)SR, -C (S) SR, -C(O)NRR, -C(S)NRR, -C(NR)NRR, where each X is independently a halogen (or "halo" group): F, Cl, Br, or I; and each R is independently H, alkyl, aryl, heterocyclyl. As would be readily understood by one skilled in the art, when a substituent is keto (i.e., =O) or thioxo (i.e., =S), or the like, then two hydrogen atoms on the substituted atom are replaced.

The term "unsubstituted" means that the specified group bears no substituents.

The term "optionally substituted" means that the specified group is unsubstituted or substituted by one or more substituents.

The term "substrate" refers to a material to which a resin formulation, fibre reinforced composite or putty formulation is applied. The term includes any type of naturally occurring and synthetic solid materials, for example plastic, paperboard, wood, glass, ceramic, metal, foil, metallized plastic film, and the like.

The term "composite" refers to components produced by impregnating a fibrous material with a thermoplastic or thermosetting resin to form laminates or layers.

The word "substantially" does not exclude "completely" e.g. a composition which is "substantially free" from Y may be completely free from Y. Where necessary, the word "substantially" may be omitted from the definition of the invention.

Unless specified otherwise, the terms "comprising" and "comprise", and grammatical variants thereof, are intended to represent "open" or "inclusive" language such that they include recited elements but also permit inclusion of additional, unrecited elements.

As used herein, the term "about", in the context of concentrations of components of the formulations, typically means +/- 5% of the stated value, more typically +/- 4% of the stated value, more typically +/- 3% of the stated value, more typically, +/- 2% of the stated value, even more typically +/- 1% of the stated value, and even more typically +/- 0.5% of the stated value.

Throughout this disclosure, certain embodiments may be disclosed in a range format. It should be understood that the description in range format is merely for convenience and brevity and should not be construed as an inflexible limitation on the scope of the disclosed ranges. Accordingly, the description of a range should be considered to have specifically disclosed all the possible sub-ranges as well as individual numerical values within that range. For example, description of a range such as from 1 to 6 should be considered to have specifically disclosed sub-ranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

### Detailed Disclosure of Embodiments

Exemplary, non-limiting embodiments of a resin formulation, a fibre reinforced composite, a putty formulation, methods of using and preparing the same, and a fibre overwrap will now be disclosed.

The disclosed resin formulation comprises:
(a) an epoxy resin;
(b) an aromatic amine curing agent, wherein the molar ratio of amine functional groups in the curing agent relative to the epoxy functional groups of the epoxy resin is 2:1 or less; and
(c) a coupling agent comprising a siloxane group coupled to an epoxy reactive group.

The epoxy resin may be aromatic epoxy resins, aliphatic epoxy resins, aromatic multi-functional epoxy resins, glycidyl ether-type epoxy resins, glycidyl ester-type epoxy resins, glycidyl amine-type epoxy resins, urethane-modified epoxy resins, rubber-modified epoxy resins, alkyd-modified epoxy resins, and combinations thereof.

In one embodiment, the epoxy comprises glycidyl ether moieties.

Exemplary glycidyl ether-type epoxy resins include, but are not limited to, bisphenol A-type epoxy resins, bisphenol F-type epoxy resins, bisphenol S-type epoxy resins, phenol novolac-type epoxy resins, triphenol alkane-type epoxy resins, cresol novolac-type epoxy resins, dicyclopentadiene-modified phenol-type epoxy resins, phenol aralkyl type-epoxy resins and resorcinol-type epoxy resins.

Exemplary glycidyl ester-type epoxy resins include, but are not limited to, hexahydrophthalate type and phthalate type epoxy resins.

Exemplary glycidyl amine-type epoxy resins include, but are not limited to, tetraglycidyl diaminodiphenylmethane (TGDDM, such as MY-720), triglycidyl-p-aminophenol, tri-glycidyl aminocresol, tetraglycidyl diaminodiphenylmethane resins, tetraglycidyl m-xylylene amine resins, and N,N-diaminocresol resins.

In a preferred embodiment, the epoxy resin is a glycidyl ether-type epoxy resin. In a more preferred embodiment, the epoxy resin is a bisphenol A-type epoxy resins. In a most preferred embodiment, the epoxy resin is diglycidyl ether of bisphenol A (DGEBA, such as DER 331). The properties of the DGEBA resins depend on the value of n, which is the number of repeating units known as the degree of polymerization. Typically, n ranges from 0 to 25.

In another preferred embodiment, the epoxy resin is poly(bisphenol A-co-epichlorohydrin) glycidyl end-capped (such as DER 662).

The resin formulation may contain one type of epoxy resin, or combinations of two or more types of epoxy resins. For example, the resin formulation may comprise a combination of DGEBA (such as DER 331) and DER 662.

Typically, the epoxy resin is present in a concentration of about 50% to about 90% by weight in the resin formulation. The epoxy resin may be present in a concentration of about 50% to about 90%, about 60% to about 90%, about 70% to about 90%, about 80% to about 90%, about 50% to about 80%, about 50% to about 70%, or about 50% to about 60% by weight in the resin formulation. Preferably, the epoxy resin is present in a concentration of about 70% to about 85% by weight in the resin formulation. For example, the epoxy resin may preferably be present in a concentration of about 70% to about 85%, about 70% to about 80%, about 70% to about 75%, about 75% to about 85%, or about 80% to about 85% by weight in the resin formulation.

One or more aromatic amine curing agents (or hardeners) may be added to accelerate and/or supplement the curing of the epoxy resin.

In a preferred embodiment, the aromatic amine hardener is a monocyclic aromatic amine.

In another preferred embodiment, the aromatic amine hardener is a multifunctional amine hardener. For example, the multifunctional amine hardener may be a diamine hardener, a triamine hardener, a tetraamine hardener, or a pentaamine hardener.

In a preferred embodiment, the aromatic amine hardener is an aromatic diamine hardener. The diamine hardener may include five and six-member carbons in the aromatic ring.

In one embodiment, the aromatic amine is not a monoamine.

The aromatic amine curing agent may include primary or secondary amine groups.

Exemplary aromatic hardeners include 3,3'-Diaminodiphenyl sulfone (DDS), 4,4'-diaminodiphenyl ether, 4,4'-diaminodiphenyl methane, 3,3'-diaminodiphenyl methane, 4,4'-diaminodiphenyl sulfone, m-phenylenediamine, p-phenylenediamine, 4,4'-diaminodiphenylpropane, 4,4'-diaminodiphenyl sulfide, 1,4-bis(p-aminophenoxy)benzene, 1,3-bis-(m-aminophenoxy)benzene, diethyltoluenediamine such as 3,5-diethyltoluene-2,4-diamine and 3,5-diethyltoluene-2,6-diamine, 1,3-bis(p-aminophenoxy) benzene, 4,4'-bis(3-aminophenoxy)-diphenyl sulfone, 2,2-bis(4-aminophenoxyphenyl)propane, trimethylene glycol di-para-aminobenzoate, and combinations thereof. In one embodiment, the aromatic amine hardener is 3,3'-Diaminodiphenyl sulfone (DDS). In a preferred embodiment, the aromatic amine hardener is 3,5-diethyltoluene-2,4-diamine. In another preferred embodiment, the aromatic amine hardener is 3,5-diethyltoluene-2,6-diamine.

Typically, the aromatic amine hardener is present in a concentration of about 5% to about 40% by weight in the resin formulation. The aromatic amine hardener may be present in a concentration of about 5% to about 40%, about 5% to about 35%, about 5% to about 30%, about 5% to about 25%, about 5% to about 20%, about 5% to about 15%, about 5% to about 10%, about 10% to about 40%, about 15% to about 40%, about 20% to about 40%, about 25% to about 40%, about 30% to about 40%, or about 35% to about 40% by weight in the resin formulation. Preferably, the aromatic amine hardener is present in a concentration of about 5% to about 25% by weight in the resin formulation. For example, the aromatic amine hardener may be present in a concentration of about 5% to about 25%, about 5% to about 20%, about 5% to about 15%, about 5% to about 10%, about 10% to about 25%, about 15% to about 25%, or about 20% to about 25% by weight in the resin formulation. More preferably, the aromatic amine hardener is present in a concentration of about 10% to about 15% by weight in the resin formulation. For example, the aromatic amine hardener may preferably be present in a concentration of about 10% to about 15%, about 11% to about 15%, about 12% to about 15%, about 13% to about 15%, about 14% to about 15%, about 10% to about 14%, about 10% to about 13%, about 10% to about 12%, or about 10% to about 11% by weight in the resin formulation.

In one embodiment, the resin formulation further comprises a cycloaliphatic amine hardener. Exemplary cycloaliphatic hardeners include 1,3-cyclohexanebis(methylamine) (1,3-CHBMA), 1,2-diaminocyclohexane, 1,3-diaminocyclohexane, 1,4-diaminocyclohexane, menthane diamine, isophoronediamine, 1,3-di(aminomethyl)cyclo-hexane, 4,4'-methylenedicyclohexyl-amine, 3,3'-dimethyl-4,4'-diaminodicyclohexylmethane, and combinations thereof. Preferably, the cycloaliphatic amine hardener is 1,3-cyclohexanebis(methylamine) (1,3-CHBMA). Typically, the cycloaliphatic amine hardener is present in a concentration of about 5% to about 25% by weight in the resin formulation. The cycloaliphatic amine hardener may be present in a concentration of about 5% to about 25%, about 5% to about 20%, about 5% to about 15%, about 5% to about 10%, about 10% to about 25%, about 15% to about 25%, or about 20% to about 25% by weight in the resin formulation. Preferably, the cycloaliphatic amine hardener is present in a concentration of about 10% to about 15% by weight in the resin formulation. For example, the cycloaliphatic amine hardener may preferably be present in a concentration of about 10% to about 15%, about 11% to about 15%, about 12% to about 15%, about 13% to about 15%, about 14% to about 15%, about 10% to about 14%, about 10% to about 13%, about 10% to about 12%, or about 10% to about 11% by weight in the resin formulation.

The resin formulation may contain one type of curing agents, or combinations of two or more types of curing agents. For example, the resin formulation may contain two or more types of aromatic amine curing agents, or a combination of cycloaliphatic amine curing agents and aromatic amine curing agents.

In a preferred embodiment, the curing agent used in the resin formulation comprises only aromatic amine hardeners.

In another preferred embodiment, the curing agent used in the resin formulation comprises a combination of aromatic amine and cycloaliphatic amine hardeners.

In one embodiment, a mixture of the aromatic amine hardeners 3,5-diethyltoluene-2,4-diamine and 3,5-diethyltoluene-2,6-diamine in various ratios is added to the resin formulation. For example, the 3,5-diethyltoluene-2,4-diamine and 3,5-diethyltoluene-2,6-diamine may be added in a 1:9, 2:8, 3:7, 4:6, 5:5, 6:4, 7:3, 8:2, or 9:1 ratio. Preferably, the ratio of 3,5-diethyltoluene-2,4-diamine to 3,5-diethyltoluene-2,6-diamine in the mixture is about 8:2.

In one embodiment, the resin formulation comprises a water activated amine curing agent. The water activated amine curing agent may be, for example, a ketimine. Upon exposure to moisture, the water activated amine curing agent is capable of reacting with the water molecules to produce a cycloaliphatic or aromatic amine curing agent.

In a preferred embodiment, the water activated amine curing agent is ketimine, and the curing agent produced through reaction of the water activated amine curing agent with water is a cycloaliphatic amine curing agent.

Preferably, the epoxy resin is present in excess of the amine curing agent to provide a more stable composition and to prevent leaching of the curing agent. In one embodiment, the molar ratio of amine functional groups in the curing agent relative to the epoxy functional groups of the epoxy resin is 2:1 or less. For example, the molar ratio of amine functional groups in the curing agent relative to the epoxy functional groups of the epoxy resin may be 2:1 or less, 1.9:1 or less, 1.8:1 or less, 1.7:1 or less, 1.6:1 or less, 1.5:1 or less, 1.4:1 or less, 1.3:1 or less, 1.2:1 or less, 1.1:1 or less, 1:1 or less, 0.9:1 or less, 0.8:1 or less, 0.7:1 or less, 0.6:1 or less, 0.5:1 or less, 0.4:1 or less, or 0.3:1 or less.

In one embodiment, the molar ratio of amine functional groups in the curing agent relative to the epoxy functional groups of the epoxy resin is at least 1:2. For example, the molar ratio of amine functional groups in the curing agent relative to the epoxy functional groups of the epoxy resin may be at least 1:2, at least 1.5:2, at least 2:2, at least 2.5:2, at least 3:2, or at least 3.5:2.

In a preferred embodiment, the molar ratio of amine functional groups in the curing agent relative to the epoxy functional groups of the epoxy resin is in the range of 7:10 to 9:10. For example, the molar ratio of amine functional groups in the curing agent relative to the epoxy functional groups of the epoxy resin may be 7:10 to 9:10, 7.5:10 to 9:10, 8:10 to 9:10, 8.5:10 to 9:10, 7:10 to 8.5:10, 7:10 to 8:10, or 7:10 to 7.5:10.

In one embodiment, the molar ratio of amine functional groups in the curing agent relative to the epoxy functional groups of the epoxy resin is 17:20.

One or more types of coupling agents comprising a siloxane group coupled to an epoxy reactive group may be added to the resin formulation.

The siloxane group is preferably a short-chain siloxane group. Short-chain siloxanes are used as coupling agents to improve adhesion between the resin and the surface of a steel substrate, hence providing long-term underwater durability.

Preferably, the coupling agent has less than 10 siloxane groups. The coupling agent may have for example 1, 2, 3, 4, 5, 6, 7, 8 or 9 siloxane groups, or between 1 to 5, 1 to 4, 1 to 3, 2 to 5, or 3 to 5 siloxane groups. Most preferably, the coupling agent has one siloxane group.

The siloxane group may be a straight-chain or branched siloxane group. Preferably, the siloxane group is a straight-chain siloxane group.

The siloxane group may comprise a substituted or unsubstituted monovalent hydrocarbon group of 1 to 20 carbon atoms. Preferably, the siloxane group is a hydrolysable siloxane group. The hydrolysable siloxane group is capable of hydrolyzing under appropriate conditions, for example under acidic or basic aqueous conditions, in either the presence or absence of a catalyst to form groups capable of undergoing condensation reactions, such as silanol (Si-OH) groups, which can effectively react with the substrate and thereby couple the resin formulation to the substrate. Exemplary hydrolysable groups include, but are not limited to, halogens such as chlorine, bromine, iodine or fluorine; alkoxy groups -OR' (wherein R' represents a lower alkyl group, preferably containing 1 to 6, more preferably 1 to 4 carbon atoms and which may optionally be substituted by one or more halogen atoms); acyloxy groups -O(CO)-R" (wherein R" represents a lower alkyl group, preferably containing 1 to 6, more preferably 1 to 4 carbon atoms and which may optionally be substituted by one or more halogen atoms); and aryloxy groups -OR"' (wherein R"' represents an aryl moiety, preferably containing 6 to 12, more preferably containing 6 to 10 carbon atoms, which may be optionally substituted by one or more substituents independently selected from halogens, and C1 to C4 alkyl groups which may optionally be substituted by one or more halogen atoms). R', R", and R"' may include linear, branched and/or cyclic structures.

The siloxane and epoxy reactive group may be coupled by a linker.

In one embodiment, the linker has 15 or less carbon atoms per molecule. For example, the linker may have 1, 2, 3, 4, 5, 6, 7, 8, 9, 10, 11, 12, 13, 14 or 15 carbon atoms per molecule.

In one embodiment, the linker has 10 or less carbon atoms per molecule. For example, the linker may have 1, 2, 3, 4, 5, 6, 7, 8, 9 or 10 carbon atoms per molecule.

In one embodiment, the linker has 5 or less carbon atoms per molecule. For example, the linker may have 1, 2, 3, 4 or 5 carbon atoms per molecule.

The linker may be saturated or unsaturated.

In one embodiment, the linker comprises an aliphatic functional group.

In another embodiment, the linker comprises an alkoxy functional group.

The epoxy reactive group in the coupling agent is preferably a polar group to effectively react with the epoxy resin and thereby couple the epoxy resin to the substrate. In one embodiment, the epoxy reactive group in the coupling agent comprises a functional group selected the group consisting of an oxirane, amine, carboxyl, anhydride, methacrylate and hydroxyl.

The coupling agent may comprise a 3-glycidyloxypropyl methoxysilane, 3-glycidyloxypropyl dimethoxysilane, 3-glycidyloxypropyl trimethoxysilane, 3-glycidyloxymethyl trimethoxysilane, 3-glycidyloxyethyl trimethoxysilane, 3-glycidyloxypropyl trimethoxysilane, 3-glycidyloxybutyl trimethoxysilane, or an amino terminated alkyl siloxane such as an amino terminated propyl siloxane. In one embodiment, the coupling agent is 3-glycidoxy-proplytrimethoxysilane (3-GPTS).

Typically, the coupling agent is present in a concentration of about 1% to about 30% by weight in the resin formulation. In a preferred embodiment, the coupling agent is present in a concentration of about 2% to about 20% by weight in the resin formulation. For example, the coupling agent may be present in a concentration of about 2% to about 20%, about 2% to about 19%, about 2% to about 18%, about 2% to about 17%, about 2% to about 16%, about 2% to about 15%, about 2% to about 14%, about 2% to about 13%, about 2% to about 12%, about 2% to about 11%, about 2% to about 10%, about 2% to about 9%, about 2% to about 8%, about 2% to about 7%, about 2% to about 6%, about 2% to about 5%, about 2% to about 4%, about 2% to about 3%, about 3% to about 20%, about 4% to about 20%, about 5% to about 20%, about 6% to about 20%, about 7% to about 20%, about 8% to about 20%, about 9% to about 20%, about 10% to about 20%, about 11% to about 20%, about 12% to about 20%, about 13% to about 20%, about 14% to about 20%, about 15% to about 20%, about 16% to about 20%, about 17% to about 20%, about 18% to about 20%, or about 19% to about 20% by weight in the resin formulation.

Preferably, the coupling agent is present in a concentration of about 5% to about 10% by weight in the resin formulation. More preferably, the coupling agent is present in a concentration of about 10% weight in the resin formulation.

The epoxy resin, amine curing agent and coupling agent may be present in a molar ratio of from about 20:14:1 to about 20:18:4. For example, the epoxy resin, amine curing agent and coupling agent may be present in a molar ratio of about 20:14:1 to about 20:18:4, about 20:15:1 to about 20:18:4, about 20:16:1 to about 20:18:4, about 20:17:1 to about 20:18:4, about 20:14:2 to about 20:18:4, about 20:14:3 to about 20:18:4, about 20:14:1 to about 20:17:4, about 20:14:1 to about 20:16:4, about 20:14:1 to about 20:15:4, about 20:14:1 to about 20:18:3, or about 20:14:1 to about 20:18:2. Preferably, the epoxy resin, amine curing agent and coupling agent are present in a molar ratio of about 20:16:2. More preferably, the epoxy resin, amine curing agent and coupling agent are present in a molar ratio of about 20:17:2.

In a preferred embodiment of the resin formulation, the epoxy resin comprises diglycidyl ether of bisphenol A (DER 331) at a concentration of about 50% to about 65% by weight, about 50% to about 60% by weight, about 55% to about 65% by weight, or about 55% to about 60% by weight, and poly(bisphenol A-co-epichlorohydrin) glycidyl end-capped (DER 662) at a concentration of about 10% to about 25% by weight, about 10% to about 20% by weight, about 10% to about 15% by weight, about 15% to about 25% by weight, about 20% to about 25% by weight, or about 15% to about 20% by weight, the aromatic curing agent comprises a mixture of 3,5-diethyltoluene-2,4-diamine to 3,5-diethyltoluene-2,6-diamine in a 1:9, 2:8, 3:7, 4:6, 5:5, 6:4, 7:3, 8:2, or 9:1 ratio at a concentration of about 5% to about 25% by weight, about 5% to about 20% by weight, about 5% to about 15% by weight, about 5% to about 10% by weight, about 10% to about 25% by weight, about 15% to about 25% by weight, about 20% to about 25% by weight, or about 10% to about 15% by weight, and the coupling agent comprises 3-glycidoxy-proplytrimethoxysilane (3-GPTS) at a concentration of about 2% to about 15% by weight, about 3% to about 15% by weight, about 4% to about 15% by weight, about 5% to about 15% by weight, about 6% to about 15% by weight, about 7% to about 15% by weight, about 2% to about 14% by weight, about 2% to about 13% by weight, about 2% to about 12% by weight, about 2% to about 11% by weight, about 2% to about 10% by weight, about 2% to about 9% by weight, or about 2% to about 8% by weight.

In one embodiment, the resin formulation further comprises a hydrophobic agent. In one embodiment, the hydrophobic agent is a long-chain difunctional polysiloxane. The long-chain difunctional polysiloxanes are used to enhance hydrophobicity, flexibility and toughening. The long-chain difunctional polysiloxane is preferably amine-terminated. Exemplary long-chain polysiloxanes include, but are not limited to, aminopropyl terminated polydimethylsiloxane, vinyl terminated polydimethyl-siloxane, a vinylmethyl and dimethyl polysiloxane copolymer, a methacryloxypropylmethyl and dimethyl polysiloxane copolymer, a vinyldimethylsiloxy terminated polymethyl(phenethylsiloxane), a vinyl terminated dimethyldiphenyl polysiloxane copolymer, a T-structure vinyl polydimethylsiloxane, a T-structure methacryloxypropyl polydimethylsiloxane, polydiphenyl siloxanes, or polytrifluoro propyl siloxanes.

The resin formulation may further comprise a moisture scavenger to form a protective layer which absorbs moisture surrounding the resin formulation when the resin formulation is applied to a substrate, and hence enhance the curing process of the epoxy resin. Exemplary moisture scavengers include, but are not limited to, silicon and tetraalkyl orthosilicate such as tetraethyl orthosilicate and tetrapropyl orthosilicate (TEOS). Preferably, the moisture scavenger is a nanoparticle moisture scavenger. More preferably, the nanoparticle moisture scavenger is tetraethyl orthosilicate (TEOS). Preferably, the moisture scavenger is present in a concentration of about 3% to about 10% in the resin formulation. For example, the moisture scavenger may be present in a concentration of about 3% to about 10%, about 3% to about 9%, about 3% to about 8%, about 3% to about 7%, about 3% to about 6%, about 3% to about 5%, about 3% to about 4% , about 4% to about 10%, about 5% to about 10%, about 6% to about 10%, about 7% to about 10%, about 8% to about 10%, or about 9% to about 10% in the resin formulation. Most preferably, the moisture scavenger is present in a concentration of about 5% in the resin formulation.

The resin formulation may also comprise other additives to impart or enhance desired characteristics related to the preparation of the resin formulation or to its application. Such additives include, but are not limited to, a curing accelerator, a curing inhibitor, a modifying agent, a viscosity modifier, a dispersion agent, a wetting agent, and/or mixtures thereof. Exemplary curing accelerators and inhibitors include, but are not limited to, phenols, phenalkamines, metal complexes, imidazoles, Mannich Bases and the like.

Exemplary modifying agents include, but are not limited to, thickening agents such as gums, cellulosics, water soluble polymers, associative thickeners and alkali swellable polymers. Representative useful commercial thickening agents and their suppliers are: Kelgin™; Alcogum™ (available from Alco Chemical); Rheolate™ (available from Rheox); Acrysol™ (available from Rohm & Haas); and Carbopol™ (available from B. F. Goodrich).

Exemplary viscosity modifiers include, but are not limited to, colloidal silicon dioxides, and modified starches such as pre-gelatinised starch.

Exemplary dispersion agents include, but are not limited to, polyacrylic acid, polymethacrylic acid, polyvinyl pyrrolidone, cellulose glycolic acid, carboxylic acids, fatty acids, waxy acids, lactic acid and salts thereof.

Exemplary wetting agents include, but are not limited to, blown fish oil, piperazine-substituted organosulfonates, and piperazinone-substituted organosulfonates.

Other additives that may be included in the resin formulation include colouring pigments such as titanium oxide, zinc white, carbon black, red oxide, cadmium red, titanium yellow, cobalt green, ultramarine, Prussian blue, cobalt blue, mars violet, Permanent Red, Hansa Yellow, Lake Red, and the like; extender pigments such as silica, slica-alumina, glass powder, glass beads, mica, graphite, barium sulfate, kaolin, clay, bentonite, diatomaceous earth, and dolomite; organic solvents, flame-proofing agents, defoaming agents, thixotropic agents, plasticizers, and the like.

The resin formulation may be provided with or without a filler. When provided with a filler in an amount at least sufficient to produce a paste-like consistency in the composition, the resin formulation may be used as a putty formulation to provide a smooth finish to the layer of resin formulation applied to an underwater structure. The filler comprises at least one of a mineral filler, organosiloxane or a mixture thereof. The filler may comprise nano-sized particles. In one embodiment, the mineral filler is selected from barytes, silica, talc, mica dust or a mixture thereof.

The filler may be present at about 10% to about 30% by weight of the resin formulation depending on the type of resin used in the formulation. For example, the filler may be present at about 10% to about 30%, about 10% to about 25%, about 10% to about 20%, about 10% to about 15%, about 15% to about 30%, about 20% to about 30%, or about 25% to about 30% by weight of the resin formulation. Preferably, the filler is present at about 20% by weight of the resin formulation.

The amounts of the above components that may be added to the resin formulation may vary within operational limits and may be determined by one skilled in the art.

The resin formulation may be provided in an uncured form or in a partially cured form.

Prior to application of the resin formulation to the substrate, the surface of the substrate, for example a damaged pipeline, may be cleaned to remove rust, fouling, oil and other contaminants, thereby promoting adhesion of the resin formulation to the substrate. Cleaning can be carried out using known methods such as sandblasting, wire brushing, water blasting, hand buffing and the like.

Once the resin formulation has been applied to the surface of the substrate, moisture, heat, UV or ultrasound may be applied to the resin formulation to activate and accelerate the curing reaction. Curing times and conditions will depend on various factors, such as the resin formulation used, the thickness of the resin formulation to be applied, the process for curing (i.e. moisture, heat, UV, ultrasound etc.), and the substrate. Curing times of about 48 hours at 80°C will typically be sufficient. Preferably, the curing time is 24 hours at 90°C.

Curing temperatures may be about 25°C to about 175°C, about 35°C to about 140°C, about 45°C to about 120°C, about 55°C to about 110°C, about 55°C to about 100°C, about 55°C to about 95°C, about 65°C to about 95°C, about 75°C to about 90°C, about 80°C to about 85°C, about 100°C to about 175°C, about 110°C to about 170°C, about 110°C to about 160°C, about 110°C to about 150°C, about 110°C to about 140°C, about 110°C to about 130°C, or about 110°C to about 120°C. Preferably, the curing temperatures are from about 35°C to about 140°C.

The thickness of underwater compositions may vary depending on factors such as the type of structure it is being applied to, the nature and extent of the repair or maintenance, and the environment in which the structure operates (for example, the pressure and the temperature of the underwater environment). Preferably, the thickness of a layer of the underwater composition is less than about 2 mm, about 1 mm, about 0.9 mm, about 0.8 mm, about 0.7 mm, about 0.6 mm, or about 0.5 mm. Most preferably, the thickness of the layer is about 0.8 mm. The resin formulation can be applied to the underwater structure directly using a roller or a brush, using a carrier material (such as a piece of cloth), or as a fibre reinforced composite.

The fibre reinforced composite comprises a fibrous material impregnated with the resin formulation as defined above. The fibrous material may be glass, polyaramid, graphite, silica, quartz, carbon, ceramic, Kevlar, basalt or organic fibre such as polypropylene and polyethylene. Preferably, the fibrous material is glass.

Preferably, the fibre reinforced composite is elongated in shape, for example in the form of a tape. Alternatively, the fibre reinforced composite may be in the form of a patch.

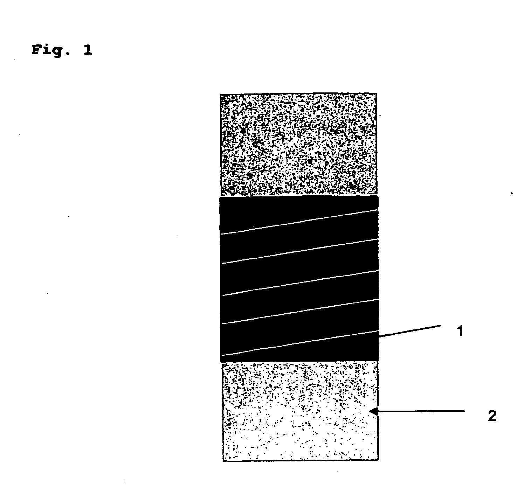

The fibre reinforced composite is typically applied to the underwater structure along a helical or spiral path, as shown in Fig. 1. As can be seen in Fig. 1, the fibre reinforced composite (1) is wrapped around one or more cylindrical underwater structure (2) in a helical or spiral path. Preferably, the fibre reinforced composite is applied along the helical or spiral path with a 50% overlap of the width of the fibre reinforced composite. The fibre reinforced composite may be applied to the underwater structure with its fibrous material impregnated with a resin formulation as defined above uncured or partially-cured. Typically, the fibre reinforced composite is provided in a partially cured form. Upon completion of application of the fibre reinforced composite on the underwater structure, the resin formulation may be activated by moisture or heat and cured completely. Where the resin formulation is to be activated by moisture, the fibre reinforced composite is preferably sealed in water-free packaging prior to application to the underwater structure. Where the fibre reinforced composite is to be activated by heat, heat can be imparted to the fibre reinforced composite via an external liquid heating blanket or through the use of heat generated from the underwater structure itself.

In another embodiment, there is provided a fibre overwrap, comprising an elongated fibrous material having an indicia disposed parallel to the longitudinal axis and at the edge of the elongated fibrous material. The fibre overwrap may further comprise an indicia disposed parallel to the longitudinal axis and at mid-width of the elongated fibrous material. In one embodiment, the fibre overwrap is impregnated with a resin formulation as defined above.

The indicia may be a reflective or fluorescent stripe with wavelengths tailored for maximum visibility under water. Preferably, the indicia is a fluorescent stripe. The fluorescent stripe is capable of glowing in the dark for enhanced visibility under water.

The width of the fibrous material typically depends on the application, for example the dimensions of the underwater structure that it is to be applied to, or the nature and extent of the repair or rehabilitation, and may range from about 50 mm to about 1500 mm. Preferably the width of the fibrous material is about 50 mm to about 1400 mm, about 50 mm to about 1300 mm, about 50 mm to about 1200 mm, about 50 mm to about 1100 mm, about 50 mm to about 1000 mm, about 50 mm to about 900 mm, about 50 mm to about 800 mm, about 50 mm to about 700 mm, about 50 mm to about 600 mm, about 50 mm to about 500 mm, about 50 mm to about 400 mm, about 50 mm to about 300 mm, about 50 mm to about 200 mm, about 50 mm to about 100 mm, about 100 mm to about 1400 mm, about 200 mm to about 1300 mm, about 300 mm to about 1200 mm, about 300 mm to about 1000 mm, about 300 mm to about 900 mm, about 300 mm to about 800 mm, about 300 mm to about 700 mm, or about 300 mm to about 600 mm. The fibrous material of the fibre reinforced composite or fibre overwrap may be disposed on a strip of non-stick backing paper which can be releasable from the fibrous material as the fibre reinforced composite or fibre overwrap is being applied to the underwater structure. This imparts additional dimensional stability to the fibre reinforced composite or fibre overwrap as the applicator applies tension to the fibre reinforced composite or fibre overwrap while wrapping it around the underwater structure. The backing paper also protects the applicator's gloves as he/she handles the fibre reinforced composite or fibre overwrap, avoiding direct contact with the resin formulation.

The resin formulation may be applied, whether directly using a roller or a brush, using a carrier material (such as a piece of cloth) or as a fibre reinforced composite, to any underwater structure. Exemplary underwater structures on which the resin formulation may be applied include, but are not limited to, pipelines, floating drill vessels, semi-sub rigs, semi-submersible platforms, pilings, power cables, signal cables, hydraulic hoses, harbour facilities, buoys, submarine stations, and submarine oil excavation units which are at least partially submerged in fresh or salt water. Such structures may be made of concrete, wood, metal, rubber, glass, ceramic, and combinations thereof.

The resin formulation is particularly well-suited for application to underwater pipelines, such as underwater oil and gas pipelines.

The resin formulation may be prepared by a process comprising mixing:
(a) an epoxy resin;
(b) an aromatic amine curing agent, wherein the molar ratio of amine functional groups in the curing agent relative to the epoxy functional groups of the epoxy resin is 2:1 or less; and
(c) a coupling agent comprising a siloxane group coupled to an epoxy reactive group.

In one embodiment, the process further comprises the step of adding a cycloaliphatic curing agent.

In one embodiment, the process further comprises the step of adding a hydrophobic agent, a moisture scavenger, a filler, a curing accelerator, a curing inhibitor, a modifying agent, a viscosity modifier, a dispersion agent, a wetting agent, and/or mixtures thereof.

The components of the resin formulation may be mixed using standard techniques with mechanical stirrers, Rotavapor, Banbury mixers, and the like. The mixing may be conducted at ambient temperature, or at temperatures of up to about 130°C, at mixing speeds of about 100 rpm to about 300 rpm. Preferably, the mixing is conducted under vacuum to reduce the amount of gas being incorporated into the mixture.

### Brief Description of Drawings

The accompanying drawings illustrate a disclosed embodiment and serves to explain the principles of the disclosed embodiment. It is to be understood, however, that the drawings are designed for purposes of illustration only, and not as a definition of the limits of the invention.
Fig. 1 shows a fibre reinforced composite or a fibre overwrap applied to a cylindrical structure in a helical or spiral path.
Fig. 2 shows a schematic of the set up of a single lap shear test. In (A), the dotted lines represent the metal retaining frame before assembly. (B) shows the substrate/resin dimensions (the metal frame is omitted for clarity). (C) shows the substrate and resin in the metal frame as cured in artificial sea water.
Fig. 3 shows the glass transition temperatures over a period of 11 days for test samples sg1-24C, sg1-32A, sg1-32B, sg1-59B and sg1-59C when cured at 60°C in artificial sea water.
Fig. 4 shows the DMTA spectra for test samples sg1-59B and sg1-32A when cured at 60°C in artificial sea water for 24 hrs. For sg1-59B, two Tg values were recorded at 92.548°C and 114.22°C, while for sg1-32A, one Tg value was recorded at 101.52°C.
Fig. 5 shows a comparison in the glass transition temperatures of the 80°C-cured test sample sg1-60 and the 60°C-cured test sample sg1-32A over a period of 11 days.
Fig. 6 shows the DMTA spectra of the test sample sg1-63 when cured at 80°C in artificial sea water for 24 hrs and at 175°C in a dry oven for 2 hrs.
Fig. 7 shows the 13C NMR spectrum for the ketimine synthesized according to the method set out in the "MATERIALS" Section (C) below.
Fig. 8 shows the glass transition temperatures for test samples sg1-65A ad sg1-65B when cured at 80°C in artificial sea water.
Fig. 9 shows a comparison of the wetability on a surface coated with an "IPN" formulation sg1-65A (right hand side droplets) with the wetability on a surface coated with a non-IPN formulation sg1-32A (left hand side droplets).
Fig. 10 shows a comparison in the Tg values at various cure temperatures (ambient temperature, 60°C, 80°C, 90°C, or 175°C) for test samples containing an aromatic amine curing agent (samples sgl-32A, sg1-60, sg1-64A) with test samples containing ketimine (samples sg1-54A, sg1-64B and sg1-66).
Fig. 11 shows the shear stress (MPa) and extension at maximum load (mm) in single shear lap tests for test samples sg1-64A (DDGE), sg1-66 (TGK) and sgl-67B (IPN) and a commercial formulation.
Fig. 12 shows the single lap shear test samples after mechanical tests (cohesive and adhesive failure tests).
Fig. 13 shows the viscosity of a test sample containing an aromatic amine curing agent (DDGE) compared to a control sample containing a cycloaliphatic amine (CHBMA) and a control sample containing an aliphatic amine (PPGBAPE).

### Best Mode

Non-limiting examples of the invention, including the best mode, and a comparative example will be further described in greater detail by reference to specific Examples, which should not be construed as in any way limiting the scope of the invention.

### MATERIALS

### (A) Epoxy Resins, Curing Agents, Coupling Agents and Other Materials

The epoxy resins and curing agents used in the test formulations are respectively listed in Tables 1 and 2 below. With the exception of DER 662, all of the epoxy resins used are liquid at ambient temperature. DER 662 is a solid in the form of fine particles, which are ground before being mixed into and dissolved in the test formulations. Woven satin glass fibre with an areal weight of 200 g/m² was used as the matrix carrier.
(3-Glycidyloxypropyl) trimethoxysilane (GPTS) having the following chemical structure, was used as the coupling agent and was sourced from Aldrich:

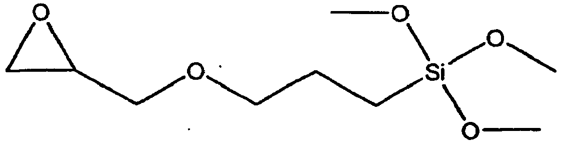

Aminopropyl terminated polydimethyl siloxane (ATPDMS) having the following chemical structure, was used as the hydrophobic agent and was sourced from Gelest:

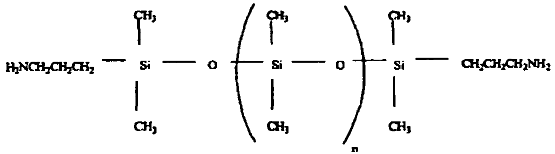

Tetraethyl orthosilicate (TEOS) was purchased from Merck.

**Table 1. Epoxy Resins**

| ***Resin*** | ***Chemical Name*** | ***Chemical Structure*** | ***Source*** |
|---|---|---|---|
| DER 331 | Diglycidyl ether of bisphenol A (DGEBA) | 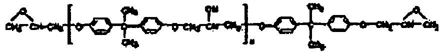 | Dow Chemicals |
| MY-720 | Tetraglycidy 1-4, 4'-diaminodiphe -nyl methane (TGDDM) | 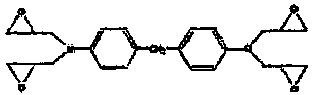 | Huntsman Advanced |
| DER 662 | Poly(bisphenol A-co-epichlorohydrin) glycidyl end-capped | 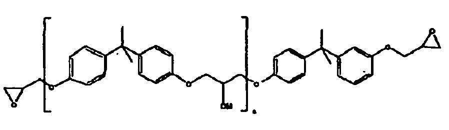 | Dow Chemicals |

**Table 2. Curing Agents**

| ***Curing Agent*** | ***Chemical Name*** | ***Chemical Structure*** | | ***Source*** |
|---|---|---|---|---|
| E100 | Diethyltoluenediamine | 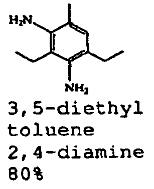 | 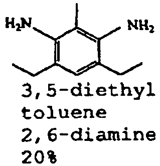 | Plastral |
| CHBMA | 1,3-Cyclohexane bis(methylamine) | 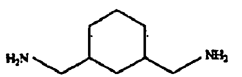 | | Aldrich |
| 3,3'-DDS | 3,3'-Diaminodiphenyl sulfone | 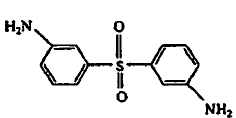 | | Aldrich |
| PPGBAPE | Poly(propyleneglycol)bis(2-aminopropyl ether) | 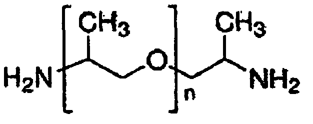 | | Aldrich |

### (B) Ketimine

Ketimine is a molecule that can react with water to form a solvent molecule (2-butanone or methyl ethyl ketone, MEK) and an amine (CHBMA) which is useful as an epoxy curing agent. As shown in Scheme 1, this reaction is reversible.

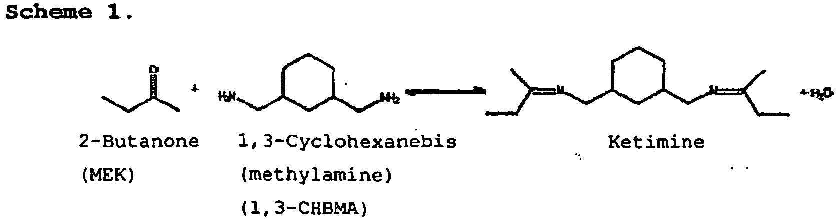

Ketimine was included in some test formulations to assess its potential as a 'latent' curing agent that would only be activated when the test formulation came into contact with water or moisture.

An excess of MEK (at least 2.5 molar excess) was used to ensure that the reaction in Scheme 1 above is complete. About 1 wt% Amberlyst-15 was added to the reaction mixture as a catalyst. The vapour temperature of the mixture was maintained between 73.8°C to 76.0°C for three hours. The water and MEK were removed as an azeotrope. As the condensation rate of the vapour reduced during the reaction, the temperature was increased until the vapour temperature was between 76°C to 81°C. The reaction was maintained at this temperature range for an additional hour. The solid catalyst (Amberlyst-15) was then removed from the resulting mixture by filtration, while excess MEK was removed under reduced pressure (at 20 mbar) using a rotary evaporator for approximately 2 hours. The product ketimine was isolated as an oil and was analysed by 13C NMR to confirm its identity.

### METHODS

### (A) Preparation of Prepreg Material

The test formulations were applied and spread evenly onto the surface of a glass fabric. The materials were kept at ambient temperature in a fumehood to allow the viscosity of the resin to increase prior to use. The weight ratio of a test formulation to the fabric was 1:1.

### (B) Preparation of Artificial Sea Water

Artificial sea water was prepared by dissolving 1 kg of red sea salt in 30 L of de-ionized water.

### (C) Preparation of Composite Laminates for DMTA Analysis

The prepreg material prepared above was cut into strips (25 X 76 mm) and submerged in artificial sea water which was prepared by adding 1 kg of red sea salt to 30 litre of de-ionized water. Four strips were combined to form a 4-layer laminate, which was then clamped between two glass slides held together by paper clips. The 4-layered laminate samples were cured in a tank of artificial sea water at 20°C (ambient temperature), 60°C, or 80°C. The laminate samples were removed from the respective tanks at specified times (between 2 hrs to 11 days) for DMTA analysis.

### (D) Single Lap Shear Tests

Stainless steel plates (grade 300 in AS/NZS 3678) were used as the metal substrate for single lap shear tests. The bonding surface was cleaned by a grit blasting process using an angular abrasive (Garnet, 30/60), which resulted in a surface roughness peak profile of approximately 50 to 80 micrometers. The grit blasted samples were kept in a vacuum desiccator to avoid contamination of the surface prior to bonding with the test formulations.

The grit blasted surface of the steel plates were prepared according to industry specification using Australian surface preparation standards for steel pipes AS1627 - 1997.

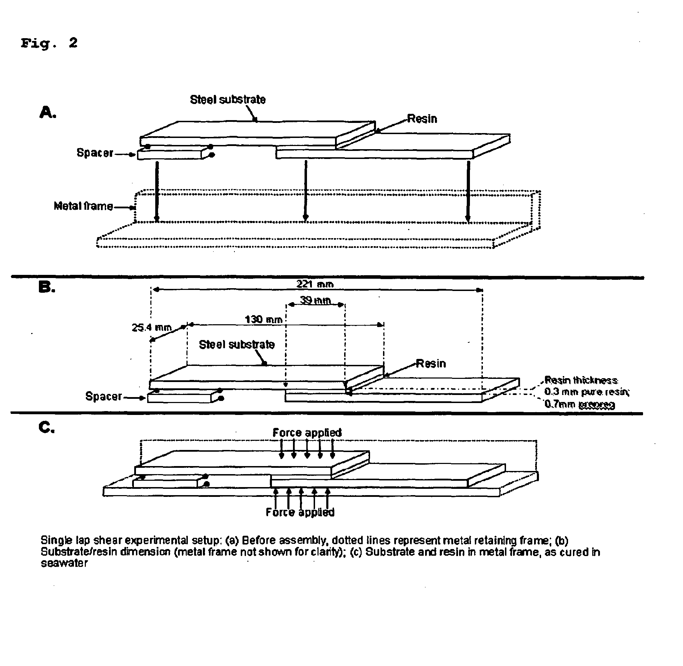

Single lap shear specimens were prepared according to ASTM D1002 (refer to Fig. 2). A silicon rubber strip having a thickness of 2 mm was used as a spacer between two steel plates.

Prepreg strips were cut to the size of the bonding area (25.4 mm x 38 mm). The prepreg strips were impregnated with a test formulation comprising an aromatic amine (sample sgl-64A or sg-101), a test formulation comprising ketimine (sample sg1-66), a test formulation comprising PDMS (sample sg1-67B), a test formulation comprising a cycloaliphatic amine (CHBMA), a test formulation comprising an aliphatic amine (PPGBAPE), or a commercial formulation.

The prepreg strips were first dipped into the artificial sea water and then laid on both sides of the steel plates. A metal frame was used to faciltate alignment. The assembled parts were held together using paper clips and cured in artificial sea water at elevated temperatures of 80°C for 48 hr, or 90°C for 24 hr. The samples were then stored in artificial sea water at ambient temperature until mechanical tests (cohesive and adhesive failure tests) were performed.

### (E) Characterisation and Analysis of Samples

### Differential Scannings Calorimetry (DSC)

DSC is the study of thermal transitions within a particular material as a function of time or temperature. The data obtained from DSC provide information as to what chemical reactions are taking place within the material, at what temperature the reaction takes place, how rapidly the reaction occurs, and in what timeframe the reaction occurs. Such data can provide an indication of the degree of cure and the conditions required to obtain maximum (or near complete) cure of the material. The DSC is also able to provide an indication of the glass transition temperature of the material, or the temperature at which the material will begin to soften. This property is related to the degree of cure and cross-linking in the network structure.

DSC analysis was carried on a Mettler Toledo 821 with "Star Software" version 9. The module was calibrated via the indium/zinc total method. Samples were run in alternating DSC mode with a heating rate of 10°C minute⁻¹. Nitrogen was used as the environmental gas. Samples of between 20 and 50 mg were encapsulated in lightweight aluminum pans (13 mg). The percentage of residual cure was determined by measuring the enthalpy associated with the unreacted resin and then comparing the measured enthalpy with the enthalpy released from the prepreg for a similar dynamic scan.

### Dynamic Mechanical Thermal Analysis (DMTA)

DMTA provides information on the behavior of a material in response to an applied force at a given frequency and temperature. This provides information on the mechanical properties of the material, which can be related to its structural network.

DMTA analysis was conducted on a Rheometrics Scientific V. This instrument was computer controlled via the software "Orchestrator." Laminate samples prepared in "METHODS" Section (B) above were cut to widths of 10 mm ± 0.2 mm. All samples were run on a small frame in a single cantilever bending mode with 0.05% strain. Single-frequency analysis (1 Hz) was run over a temperature range of 30°C to 350°C, at a heating rate of 5°C minute⁻¹. Glass transition temperatures were derived by the tan δ peak position.

### Nuclear Magnetic Resonance (NMR)

Nuclear Magnetic Resonance (NMR) was measured on a Bruker BioSpin Av200 with "ICON-NMR" software (version 4.2). Approximately 50 mg to 100 mg of a sample were dissolved in 0.7 ml deuterated chloroform. The 13C experiments (50 MHz) were measured and the shift at 170 ppm was used to identify the functional group of imine (C=N) in the ketimine.

### (F) Pot Life

Pot life was qualitatively determined by observing whether a test formulation became unworkable within a day at room temperature or after storage at 4°C for several days. Such test formulations were deemed to be unable to meet desired handling and storage requirements.

### EXAMPLE 1

### Preliminary Test Formulations

Table 3 shows the compositions of various test formulations prepared in a preliminary experiment. The compositions comprised an epoxy resin (DGEBA), a cycloaliphatic curing agent (1,3-CHBMA) or an aromatic curing agent (3,3'-DDS or E100), and optionally a siloxane (GPTS) or a silane (TEOS). The respective cure onset temperatures (as determined using DSC analysis at a heating rate of 10°C/min) are also shown in Table 3.

**Table 3. Preliminary test resin formulations cured in artificial seawater at 80°C**

| **Sample ID** | **Resin** | **Curing Agent** | **Siloxane or Silane** | **Adhesion to Substrate** | **Cure Onset Temperature (°C)** |
|---|---|---|---|---|---|
| sg1-5A | DGEBA | 1,3-CHBMA | - | Low | 25-30 |
| sgl-5C | DGEBA | E100 | - | Low | 90-100 |
| sg1-9B | DGEBA | E100 | 3-GPTS (Siloxane) | High | 110-120 |
| sg1-6B | DGEBA | 3,3'-DDS | TEOS (Silane) | Medium | 120-130 |
| sg1-9A | DGEBA | 1,3-CHBMA + E100 | - | Medium | 30-40, 130-140 |

Addition of an cycloaliphatic amine (such as 1,3-CHBMA) to a test formulation (as in sample sg1-5A) was shown to reduce the cure onset temperature of the formulation to 25-30°C. In contrast, addition of aromatic amines (such as E100) to the test formulation (as in sample sg1-5C) was shown to increase the cure onset temperature to 90-100°C.

A cycloaliphatic amine (1,3-CHBMA) as well as an aromatic amine (E100) were added to the test sample sg1-9A. This test formulation exhibited two cure onset temperatures, the first at 30-40 °C and the second at 130-140 °C, which indicates that this test formulation would require additional heat in order to achieve complete cross-linking of the epoxy network. However, it is noted that the adhesion strength is improved when an aromatic amine is added together with the cycloaliphatic amine compared to when the cycloaliphatic amine is added alone.

Test sample sg1-9B demonstrated excellent adhesion to the glass substrate due to the addition of 3-GPTS into the epoxy resin formulation comprising the aromatic amine curing agent E100. In contrast, test samples sg1-5A and 5C (without addition of 3-GPTS) showed low adhesion to the glass substrate, while test samples sg1-6B (with addition of silane TEOS) and sg1-9A (without addition of coupling agent) only exhibited medium adhesion to the glass substrate. The adhesion of test sample sg1-9B to the glass substrate was so strong that the test sample could not be removed from the glass slide for DMTA analysis. This formulation also exhibited high toughness characteristics, which made it difficult for use in preparation of samples for DSC analysis. Due to its excellent adhesion to glass substrates in artificial sea water when cured at an elevated temperature of 80°C, test sample sg1-9B was selected as the base formulation for development of additional test formulations in EXAMPLE 2 below.

### EXAMPLE 2

### Epoxy Resin Formulations with Aromatic Amine Curing Agents

The composition of the base formulation "A" is shown in Table 4. The epoxy resins used were DER 331 (or DGEBA) and DER 662, the aromatic amine used was E100, and the coupling agent used was GPTS.

**Table 4. Composition of base formulation "A"**

| **Component** | **Parts by weight** |
|---|---|
| DER 331 (DGEBA) | 57.1 |
| Der 662 | 21.0 |
| GPTS | 7.8 |
| E100 | 14.1 |
| Total | 100.0 |

Additional test formulations with the aromatic amine curing agent E100 were prepared and cured in artificial sea water at 60° or 80°C as shown in Table 5.

**Table 5. Additional test formulations with aromatic amine curing agents**

| **Sample ID** | **Test Formulations (GPTS w/w %)** | **Artificial Sea Water Temperature** |
|---|---|---|
| sg1-24C | DER(331+662) + GPTS:E100 (11%) | 60°C |
| sgl-32A | DER(331+662) + GPTS:E100 (10%) | 60°C |
| sg1-32B | DER(331+662) + GPTS:E100 (15%) | 60°C |
| sg1-59B | TGDDM + GPTS:E100 (10%) | 60°C |
| sg1-59C | DER(331+662)+ TGDDM+GPTS:E100 (10%) | 60°C |
| sg1-60 | DER(331+662) + GPTS:E100 (10%) | 80°C |
| sg1-63 | DER(331+662) + GPTS:DDS (10%) | 80°C |

| | | |
|---|---|---|
| DDS = 3,3'-DDS | | |

### (a) Resin formulations cured at 60°C in artificial sea water

In the sub-sea environment, only limited external heat can be provided to assist the composite curing process. Typically, the curing rate doubles for every 10°C rise in the cure temperature.

Preliminary data with commercial and test formulations showed that the Tg and other properties of the composites did not meet the required industrial specification when cured at ambient temperature of ∼25° (data not shown). Hence, a series of experiments at higher cure temperatures of 60°C and 80°C was undertaken. As shown in Table 5, the test samples sg1-24C, sgl-32A, sg1-32B, sgl-59B and sg1-59C were tested at 60°C while test samples sg1-60 and sg1-63 were tested at 80°C.

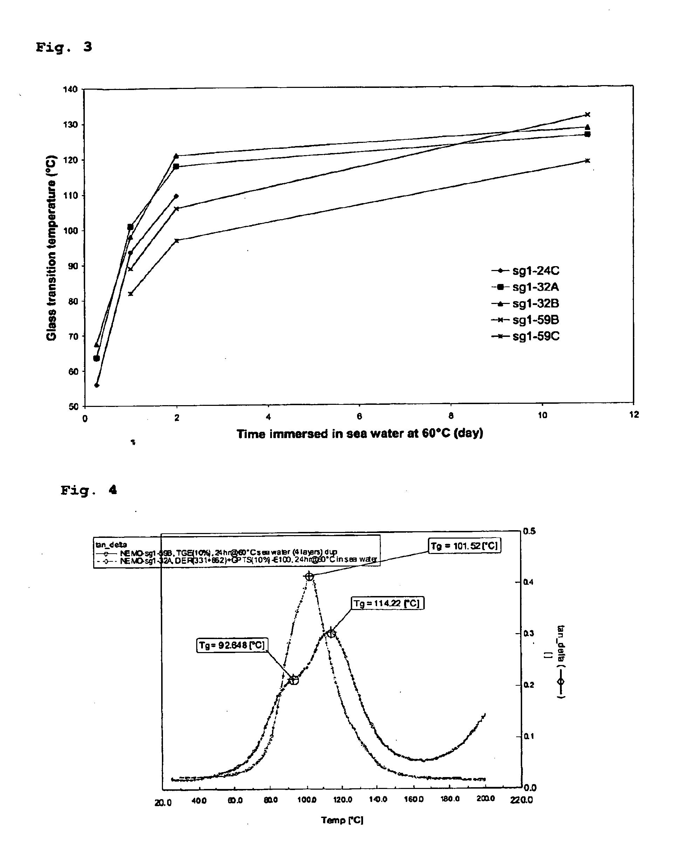

The samples were subjected to DMTA analysis where the respective tan δ peaks, which provide an indication of the molecular movement within the material, were compared. A broad or double tan δ peak indicates multiple chemical structures, with the lowest Tg peak representing an incomplete or under cured network. Fig. 3 shows the change in tan δ as a function of time for the test samples cured at 60°C in artificial sea water (i.e. samples sg1-24C, sg1-32A, sg1-32B, sg1-59B and sg1-59C). The Tg was seen to increase rapidly in the first 48 hrs for all the samples, with additional increases in Tg of about 15°C over the next 9 days. It can also be seen that the Tg values for samples sg1-32A (GPTS 10%), sg1-24C (GPTS 11%) and sg1-32B (GPTS 15%) were comparable. Hence, the content of the coupling agent (GPTS) had little effect on the Tg when added in amounts of 10-15% w/w. Sample sg1-59B, which contained TGDDM in place of DER (331 and 662), exhibited the highest Tg over the 11 day test period. However, the use of the tetra-functional epoxy resin TGDDM in sample sg1-59B in place of the di-functional epoxy resin DER(331 and 662) in sample sg1-32A resulted in a DMTA spectra with two Tg values (Fig. 4). A lower Tg value was seen at a first peak at 92.548°C and a higher Tg value was seen at a second peak at 114.22°C. This may be due to the lower reactivity of TGDDM compared to DER 331 (DGEBA) at 60°C and the lower flexibility of the TGDDM molecules compared to the DER 331 (DGEBA) molecules.

### (b) Resin formulations cured at 80°C in artificial sea water

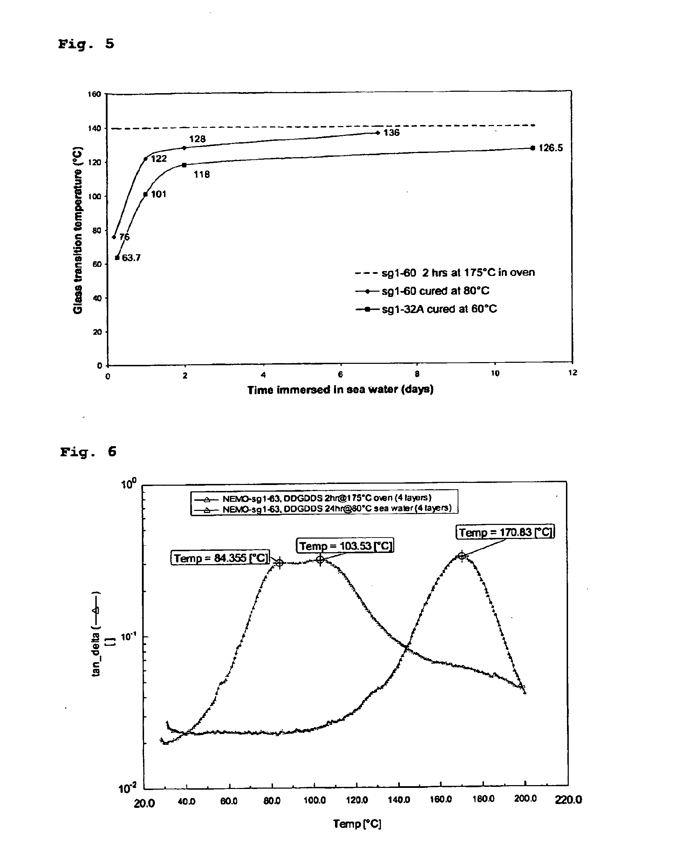

To improve the Tg values of the test formulations, an artificial sea water tank was set up at 80°C to cure the laminates impregnated with the test formulations. Two test formulations comprising the aromatic amines E100 (sample sg1-60) or DDS (sample sg1-63) were cured in the 80°C artificial sea water tank. Additional resin laminates impregnated with these two formulations were also cured in a dry oven at 175°C for 2 hrs to determine the Tg that can be reached for these two formulations when fully cured. The Tg for fully cured laminates impregnated with samples sg1-60 and sg1-63 were 140°C (Fig. 5) and 171°C (Fig. 6) respectively as determined using DMTA analysis.

Fig. 5 shows an increase in the Tg values for the 80°C-cured sample sg1-60 compared with the 60°C-cured sample sg1-32A for curing periods of up to 11 days. Both samples have the same composition (as shown in Table 5), but were cured at different temperatures. Sample sg1-60 cured at the higher temperature of 80°C showed a higher Tg value of 136°C after 7 days, which is close to the maximum Tg of 140°C attainable when the material was fully cured in a dry oven at 175°C for 2 hours. In contrast, even after 11 days of curing, the 60°C-cured sample sg1-32A only showed a Tg value of 126.5°C. These results indicate that it is important to apply additional heat to achieve a higher crosslink density and higher Tg values.

Fig. 6 shows the DMTA spectrum for sample sg1-63. The multiple tan δ peaks arise from the different chemical structures of the two DDS epoxy molecules (3,3'-DDS and 4,4'-DDS) used in the formulation. When cured at 175°C in a dry oven for 2 hr, the fully cured formulation exhibited a high Tg value of 170°C. A cure temperature of above 140°C is typically required for curing 4,4'-DDS. Hence, when cured at 80°C only, the lack of reactivity of 4,4'-DDS at this low cure temperature resulted in low Tg values of 85°C and 103°C for sample sg1-63. These Tg values for samples sg1-63 (containing DDS) were lower than the Tg value of 122°C achieved after 24 hours (1 day) for sample sgl-60, which contains E100 in place of DDS.

### EXAMPLE 3

### Epoxy Resin Formulations with Water Activated Ketimine

Once submerged in water, the ketimine molecules added to the test formulations were expected to react with water to produce the cycloaliphatic amine curing agent 1,3-CHBMA. As this is an aliphatic curing agent, it was expected to be relatively reactive with the epoxy groups of the resin and little additional heat would therefore be required for reaction to occur between the two compounds.

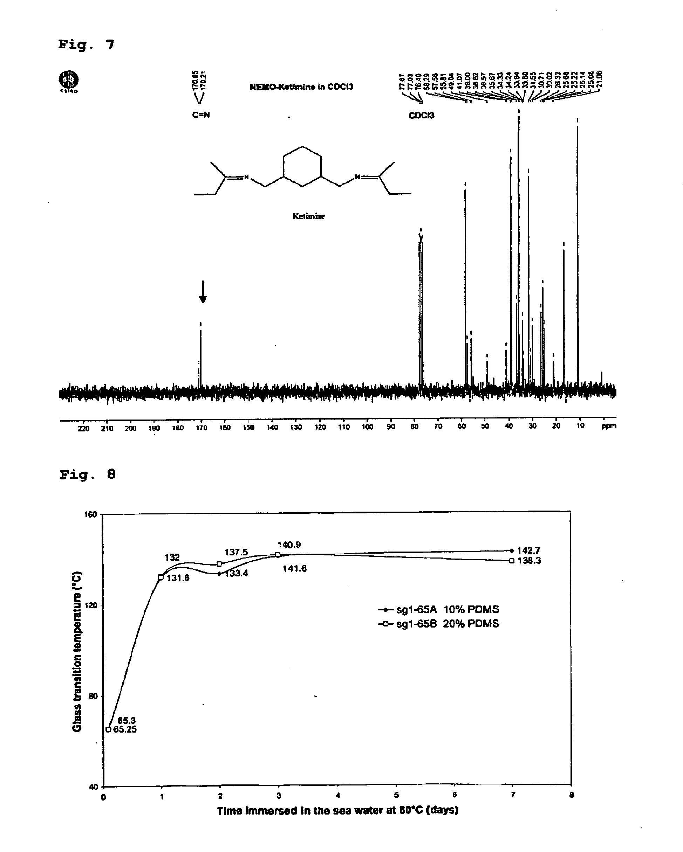

In order to combine the advantages of a fast cure at low curing temperatures as seen with aliphatic amine cured epoxy resins with the advantages of a longer pot life and higher Tg values seen with aromatic amine cured epoxy resins, test formulations comprising an epoxy resin, a ketimine (in place of an aromatic amine curing agent), and a coupling agent comprising a siloxane group were prepared. Ketimine comprises an aliphatic amine that is blocked from reacting with water by an aliphatic ketone moiety. When a ketimine molecule reacts with water (Scheme 1 in "MATERIALS" Section (C) above), an amine is formed which can react with an epoxy. Fig. 7 shows the 13C NMR spectrum of the ketimine that was synthesised according to the method set out in the "MATERIALS" Section (C) above. The formation of ketimine was confirmed by the "imine" (C=N) peak seen at 170 ppm.

The composition of the base formulation "B" comprising ketimine is shown in Table 6, and the test samples using this base formulation are shown in Table 7.

**Table 6. Composition of base formulation "B" comprising ketimine**

| **Component** | **Parts by weight** |
|---|---|
| MY-721 | 63.0 |
| GPTS | 6.4 |
| Ketimine | 30.6 |
| Total | 100.0 |

**Table 7. Test formulations with ketimine**

| **Sample ID** | **Epoxy Resin Formulation (GPTS, w/w%)** | **Artificial Sea Water Temperature** |
|---|---|---|
| sg1-54C | DGEBA + GPTS (10.1%) + Ketimine | 60°C |
| sg1-55C | DGEBA + GPTS (5.0%) + Ketimine | 60°C |

The test formulations with ketimine demonstrated an adequate pot life as observed during handling of the material, hence making the formulations suitable for use in the manufacture of prepregs or composite overwraps. Exposure to water liberated the cycloaliphatic amine 1,3-CHBMA and the material could be cured relatively rapidly. A complete cure could be achieved in 2 hours at ambient temperature (23°C). However, activation of all available amine groups would require the ketimine to be in full contact with water.

### EXAMPLE 4

### Interpenetrating Network Composites (IPNs) : Epoxy Resin Formulations with Aromatic Amine Curing Agents and PDMS

Interpenetrating network polymers are designed to have the material properties that combine the best features of two independent phases. For example, elastomeric polymers can be used to toughen brittle but thermally stable epoxy resins.

A test formulation was prepared, which comprised 10-20% of the flexible and fast reacting amino terminated polysiloxane ATPDMS, and the slower reacting aromatic amine curing agent E100. The ATPDMS reacts first to give a flexible (elastomeric) polymer chain which then interpenetrates the rigid epoxy network. The composition of the base formulation "C" comprising ATPDMS (or the "IPN" base formulation) is shown in Table 8. Test samples of this "IPN" base formulation are shown in Table 9.

**Table 8. Composition of base formulation "C" comprising ATPDMS (or the "IPN" base formulation)**

| **Component** | **Parts by weight** |
|---|---|
| DER 331 | 51.9 |
| DER 662 | 19.1 |
| GPTS | 7.1 |
| E100 | 12.8 |
| ATPDMS | 9.1 |
| Total | 100.0 |

**Table 9. Test "IPN" formulations**

| **Sample ID** | **Epoxy Resin Formulation (ATPDMS, w/w%)** | **Artificial Sea Water Temperature** |
|---|---|---|
| sg1-65A | DER(331+662)+ GPTS + E100 + ATPDMS (10%) | 80°C |
| sg1-65B | DER(331+662)+ GPTS + E100 + ATPDMS (20%) | 80°C |

Fig. 8 shows the Tg properties of the test formulations with ATPDMS. A similar Tg was achieved after 1 day of cure for both the 10% and 20% ATPDMS formulations, indicating that the polysiloxane chains are fully interpenetrating. While pot life appeared to be a little shorter compared to formulations without ATPDMS, the composites of the test "IPN" formulations could still be prepared after 24 hrs of storage in a refrigerator at 4°C.

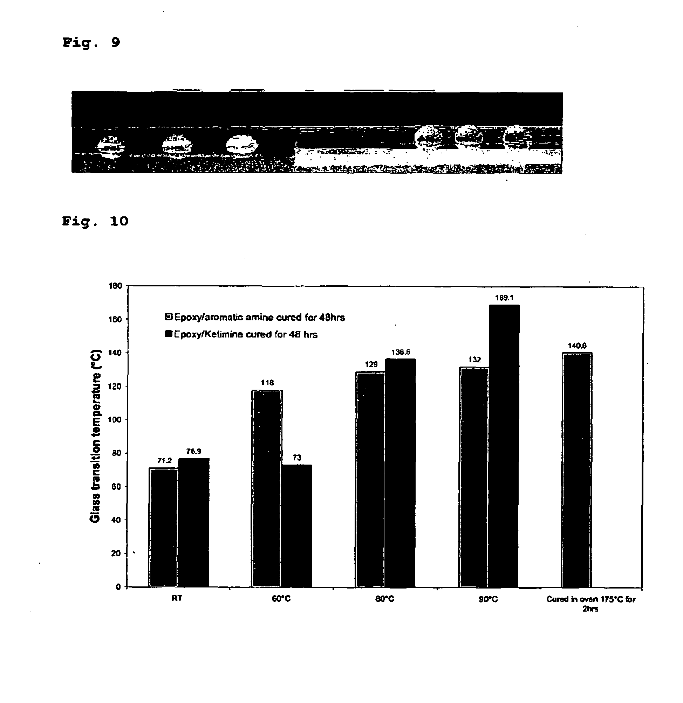

A crude wetability measurement was made by observing the contact angle of a drop of pure water on the flat surface coated with a test formulation. The drop of water was repelled from the surface coated with an "IPN" formulation sg1-65A to a greater extent than from the surface coated with a non-IPN formulation sg1-32A (Fig. 9). This is due to the incorporation of hydrophobic ATPDMS groups in the "IPN" formulation. Hence, the "IPN" formulations impart water resistance to the resin formulation, which is expected to result in enhanced adhesion of the resin to the substrate and enhanced long-term durability.

The "IPN" formulation sg1-65A also showed better bonding properties to glass compared to a commercial formulation as demonstrated by the relative difficulty in removing the "IPN" formulation from a glass surface by scraping with a razor blade.

### COMPARATIVE EXAMPLES

### COMPARATIVE EXAMPLE 1

### Tg Values for Test Formulations with Aromatic Amine Curing Agents Compared to Test Formulations with Ketimine

Fig. 10 shows a comparison of the Tg values at various cure temperatures of 25°C (ambient temperature), 60°C, 80°C, or 90°C for a 48-hr period in artificial sea water, or at 175°C for 2 hours in a dry oven for a test formulation containing an aromatic curing agent with a test formulation containing water activated ketimine. The samples evaluated are as shown in Table 10 below.

**Table 10. Samples evaluated for Tg values at various cure temperatures**

| **Sample ID** | **Test Formulations** | **Cure Temperature** |
|---|---|---|
| sg1-32A | DER(331+662) + GPTS:E100 (10%) | RT or 60°C |
| sg1-60 | DER(331+662) + GPTS:E100 (10%) | 80°C |
| sg1-64A | DER(331+662) + GPTS:E100 (10%) | 90°C |
| sg1-54A | MY-721 + GPTS:Ketimine (10%) | RT or 60°C |
| sg1-64B | MY-721 + GPTS:Ketimine (10%) | 80°C |
| sg1-66 | MY-721 + GPTS:Ketimine (10%) | 90°C |

| | | |
|---|---|---|
| RT = room temperature | | |

It can be seen from Fig. 10 that at a cure temperature of 60°C, the test formulation containing an aromatic amine curing agent exhibited a higher Tg value (118°C) than the test formulation containing ketimine (73°C). At a cure temperature of 80°C, the Tg values of both formulations were comparable (129°C for the test formulation containing an aromatic amine curing agent, and 136.6°C for the test formulation containing ketimine). At a cure temperature of 90°C, the test formulation containing ketimine exhibited a higher Tg value (169.1°C) than the test formulation containing an aromatic amine curing agent (132°C). It can also be seen from Fig. 10 that at a cure temperature of 90°C after a cure period of 48 hrs, the test formulation containing the aromatic amine curing agent exhibited a Tg value that was close to the Tg value of the material that was fully cured in the oven.

### COMPARATIVE EXAMPLE 2

### Tg Values for Test Formulations with Aromatic Amine Curing Agents Compared to Control Formulations with Aliphatic Amine and Commercial Formulation

A control formulation using the aliphatic amine PPGBAPE was prepared as shown in Table 11 below.

**Table 11. Composition of control formulation with aliphatic amine evaluated for Tg values at room temperature or at 90°C**

| Component | Parts by weight (%) |
|---|---|
| DGEBA (DER331) | 64.9 |
| PPGBAPE | 35.1 |

The test formulation was prepared using base formulation "A" using 10% by weight of GPTS (Table 12).

**Table 12. Test formulation with aromatic amine curing agent evaluated for Tg values at room temperature or at 90°C**

| **Sample ID** | **Test Formulation** | **Cure Temperature** |
|---|---|---|
| sg1-101 | DER(331+662) + GPTS:E100 (10%) | RT or 90°C |

The control formulation was cured at room temperature for 24 hr, 48 hr or 7 days, and at 90°C for 24 hr or 48 hr. The test formulation was cured at room temperature for 48 hr or 7 days, and at 90°C for 24 hr or 48 hr. A commercial formulation (containing aliphatic amine as curing agent) was cured at room temperature for 24 hr, 48 hr or 7 days, and at 90°C for 48 hr.

The Tg values of the control and commercial formulations are set out in Table 13 below and compared to the Tg values of the test formulation.

**Table 13. Comparison of Tg values between test formulation, control formulation and a commercial formulation**

| **Formulations** | **Tg (°C)** | | | | |
|---|---|---|---|---|---|
| | **Room Temperature** | | | **90°C** | |
| | **24 h** | **48 h** | **7 d** | **24 h** | **48 h** |
| DER331+ PPGBAPE (Control) | 1) 52.2 | 1) 37.4 | 1) 37.8 | 1) 56.8 | 1 )72.2 |
| | 2) 57.8 | 2) 66.5 | 2) 30.9 | 2) 58.8 | 2) 75.0 |
| | | | 3 )37.2 | | |
| sg1-101 (Test) | | 71.2 | 1)61.6 | 1) 129.55 | 1) 133.9 |
| | | | 2)63.3 | 2) 125.94 | 2) 130.6 |
| Commercial formulation | 73.8 | 92.3 | 89.5 | | 92.9 |
| | | | | | 102.7 |

It can be seen from Table 13 that at a cure temperature of 90°C, the test formulation containing an aromatic amine (E100) exhibited significantly higher Tg values than the control formulation containing an aliphatic amine (PPGBAPE) as well as a commercial formulation that is available in the market. In particular, at a cure temperature of 90°C, the Tg values of the test formulation was above 120°C (i.e. 129.55°C and 125.94°C) after 24 h, and increased to more than 130°C (i.e. 133.9°C and 130.6°C) after 48 h. These Tg values are significantly higher than those of the control formulation containing an aliphatic amine (i.e. 56.8°C and 58.8°C after 24 h, and 72.2°C and 75.0°C after 48 h). These Tg values are also significantly higher than those of the commercial formulation containing an aliphatic amine (i.e. 92.9°C and 102.7°C after 48 h). Hence, the use of an aromatic amine curing agent in the test formulation resulted in the resin formulation exhibiting a high glass transition temperature exceeding 120°C when cured at 90°C, which was significantly higher than the glass transition temperature of the control and commercial formulations, both of which contained aliphatic amine curing agents.

### COMPARATIVE EXAMPLE 3

### Single Lap Shear Tests on Formulations Containing Aromatic Amine, Ketimine, ATPDMS and Commercial Formulation

Single lap shear tests were carried out according to ASTM D1002 as set out above in "METHODS" Section (D). The samples subjected to single lap shear tests are shown in Table 14.

**Table 14. Single lap shear test samples**

| **Sample ID** | **Formulation** |
|---|---|
| sg1-64A | Epoxy resin formulation containing aromatic amine curing agent: DER (331+662) + GPTS:E100 (10%) |
| sg1-66 | Epoxy resin formulation containing ketimine: MY-721 + TGK (10%) + GPTS |
| sgl-67B | "IPN" formulation: DER (331+662) + GPTS + E100 + ATPDMS (10%) |
| Control | Commercial formulation |

After curing at 80°C in artificial sea water for 48 hrs, the samples were stored in artificial sea water at ambient temperature until mechanical tests were performed.

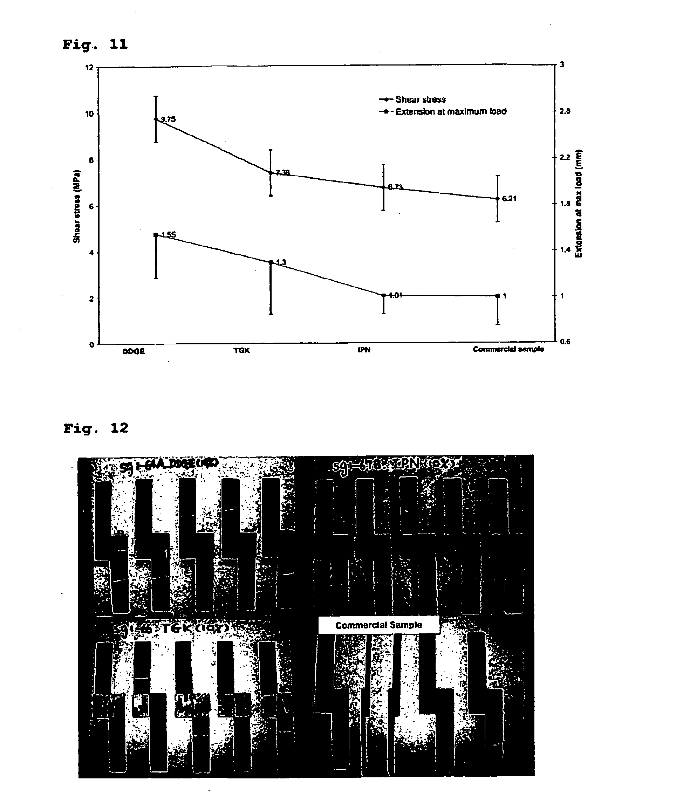

Fig. 11 shows the average failure stresses and extensions at maximum load for the four materials tested. Fig. 12 shows the failure mode as either adhesive, cohesive or both. The results indicate that siloxane modified (GPTS) epoxy/aromatic amine (sample sgl-64A) cured at 80°C in artificial sea water showed superior bonding to the steel substrates as well as the highest extension during the test. However, by incorporating ATPDMS into the epoxy/aromatic amine resin to form IPNs (sample sg1-67B), the adhesive performance decreased from 9.75 MPa to 6.73 MPa (Fig. 11). This can be attributed to the incorporation of the polysiloxane into the system which provides a low energy surface. Both samples sg1-64A and sgl-67B exhibited adhesive failure, which indicates a higher self-bonding strength within the actual composite material. However, in the case of the ketimine-containing formulation (sg1-66), this sample exhibited approximately 30% lower adhesion strength than sample sgl-64A containing the aromatic amine. This is attributed to the incomplete hydrolysis reaction of ketimine (to form cycloaliphatic amine), which could result in incomplete cure of the resin.

Most of the test samples failed in a combination of adhesive and cohesive modes. However, all three test formulations sg1-64A, sg1-66 and sg1-67B showed higher adhesive strength than a commercial resin formulation cured under the same conditions.

### COMPARATIVE EXAMPLE 4

### Single Lap Shear Tests on Formulations Containing Cycloaliphatic Amine, Aliphatic Amine and Aromatic Amine, and Commercial Formulation

Single lap shear tests were carried out according to ASTM D1002 as set out above in "METHODS" Section (D) on a control formulation containing an aliphatic amine, a control formulation containing a cycloaliphatic amine, a test formulation containing an aromatic amine, and a commercial formulation.

The control formulation contained 64.9% by weight DGEBA and 35.1% by weight PPGBAPE (i.e. "Aliphatic").

The control formulation containing the cycloaliphatic amine contained 86.0% by weight DGEBA and 14.0% by weight CHBMA (i.e. "Cycloaliphatic").

The composition of the test formulation containing the aromatic amine (i.e. "Aromatic") is as set out in Table 4 above.

After curing at 80°C for 48 hr or 90°C for 24 hr in artificial sea water, the samples were stored in artificial sea water at ambient temperature until mechanical tests were performed. The results are set out in Table 15 below.

**Table 15. Single lap shear test results for formulations containing aromatic amine, and commercial formulation cured at 80°C for 48 hr**

| **Test Formulations** | **Time** | **Cure Temp. (°C)** | **Average Load on Failure (N/mm²)** |
|---|---|---|---|
| DER331+DER662+GPTS+E100* (Aromatic) | 48 | 80 | 9.75 |
| DER331+DER662+GPTS+E100 (Aromatic) | 48 | 80 | 12.30 |
| Commercial* | 48 | 80 | 6.21 |
| Commercial | 48 | 80 | 7.34 |

| | | | |
|---|---|---|---|
| * Test / commercial formulation applied to prepreg | | | |

**Table 16. Single lap shear test results for formulations containing cycloaliphatic amine, aliphatic amine and aromatic amine cured at 90°C for 24 hr**

| **Test Formulations** | **Time** | **Cure Temp. (°C)** | **Average Load on Failure (N/mm²)** |
|---|---|---|---|
| DGEBA+CHBMA (Cycloaliphatic) | 24 h | 90 | 0.64 |
| DGEBA+PPGBAPE (Aliphatic) | 24 h | 90 | 0.75 |
| DER331+DER662+GPTS+E100 (Aromatic) | 24 h | 90 | 3.67 |

As can be seen from Table 15, the test formulations containing the aromatic amine curing agent (E100) exhibited higher adhesive strength than the commercial formulation tested (which contained aliphatic amine curing agents) when cured at 80°C for 48 hr. The formulation containing the aromatic amine curing agent (E100) resulted in an average load on failure value of 9.75 N/mm² when applied to a prepreg and 12.30 N/mm² when tested as a pure resin. In contrast, the commercial formulation only resulted in an average load on failure of 6.21 N/mm² when applied to a prepreg and 7.34 N/mm² when tested as a pure resin.

As can be seen from the results in Table 16, the test formulations containing the aromatic amine curing agent (E100) also demonstrated significantly higher adhesive strengths than the control formulation containing the cycloaliphatic amine curing agent (CHBMA) and the control formulation containing the aliphatic amine curing agent (PPGBAPE) when cured at 90°C for 24 hr. The test formulations containing the aromatic amine curing agent (E100) resulted in an average load on failure of 3.67 N/mm². In comparison, the control formulation containing the cycloaliphatic amine curing agent (CHBMA) only resulted in an average load on failure of 0.64 N/mm², while the control formulation containing the aliphatic amine curing agent (PPGBAPE) only resulted in an average load on failure of 0.75 N/mm². These two formulations also showed poor bonding. For the test formulation containing the cycloaliphatic amine curing agent (CHBMA), one of five specimens tested fell apart when being removed from the water tank containing the sea water and a further two specimens failed on loading. Similarly, for the control formulation containing the aliphatic amine curing agent (PPGPABE), two of five specimens tested failed before loading and a further specimen failed on loading.

Hence, the use of aromatic amine as curing agent resulted in epoxy resin formulations with superior adhesive strength and bonding properties in addition to higher Tg values when used in underwater environments compared to use of cycloaliphatic or aliphatic amines.

### COMPARATIVE EXAMPLE 5

### Pot Life Data on Formulations Containing Cycloaliphatic Amine, Aliphatic Amine or Aromatic Amine

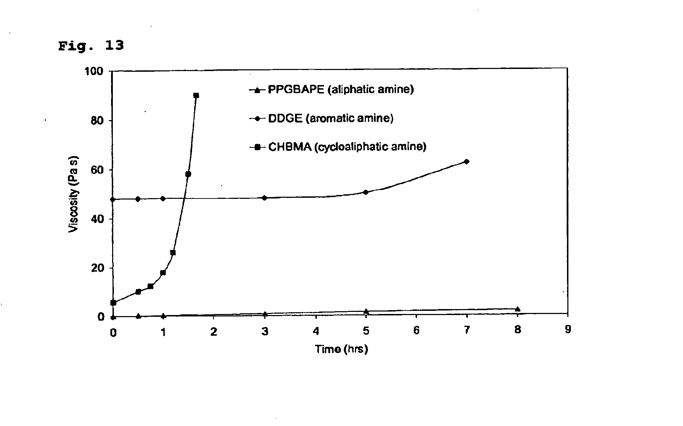

Fig. 13 shows the viscosity of formulations containing an aliphatic amine, a cycloaliphatic amine or an aromatic amine, over a period of 8 hr. As can be seen from Fig. 13, although the formulation containing the aromatic amine has the highest initial viscosity, the viscosity does not increase significantly within the first 5 hours at room temperature (23°C), indicating a sufficient window for application of the formulation onto the substrate and hence, an acceptable pot life. The formulation containing the cycloaliphatic amine has a lower initial viscosity, but this rises rapidly within the first 60 to 90 minutes of use, indicating an unacceptable pot life for the application. The formulation containing the aliphatic curing agent shows very low viscosity and little change in viscosity over the duration of the experiment, as can be expected from the inability of the aliphatic amine curing agent to form a densely cross-linked structure that is reflected in its low Tg value, even after curing at 90°C for 24 hr. From the data above, it can be clearly seen that resin formulations comprising an aromatic amine curing agent were superior in that these formulations demonstrated improved pot life (see Fig. 13 and COMPARATIVE EXAMPLE 5), higher Tg values of above 120°C at cure temperatures of about 80°C or 90°C (and hence higher polymer strength) (see Fig. 5, Fig. 10 and COMPARATIVE EXAMPLE 2), and higher adhesive and bonding properties (as seen in the single lap shear tests in COMPARATIVE EXAMPLES 3 and 4 and Fig. 11, where these formulations showed high average load on failure values of 3.67 N/mm² when cured at 90°C and 9.75 and 12.30 N/mm² when cured at 80°C) compared to resin formulations comprising a cycloaliphatic or aliphatic amine curing agent, or a commercial formulation (containing an aliphatic amine curing agent). The use of cycloaliphatic amine alone resulted in a resin formulation that exhibited shorter pot life of less than about 1.5 hr (see Fig. 13 and COMPARATIVE EXAMPLE 5) and lower adhesion / bonding properties (see Table 16 where the average load on failure value was 0.64 N/mm² when cured at 90°C) compared to the use of aromatic amine alone, although the Tg values were comparable. However, when an aromatic amine is added to the resin formulation containing cycloaliphatic amine, improved adhesion / bonding properties were achieved. A resin formulation comprising a cycloaliphatic amine curing agent alone was still superior to the resin formulation comprising an aliphatic amine curing agent as it demonstrated higher Tg values (and hence higher polymer strength). As can be seen from the above data, the use of an aliphatic amine curing agent resulted in poor adhesion / bonding properties (see Table 16 where the average load on failure value was 0.75 N/mm² when cured at 90°C) and very low Tg values of about 56°C when cured at 90°C for 24 hr (see Table 13).

### Applications

The resin formulations as disclosed herein are well-suited for use on underwater structures, such as underwater oil and gas pipelines, because such structures are typically exposed to environments of high temperatures (above 100°C) and high pressures.

Advantageously, the resin formulations disclosed herein exhibit an unexpectedly high glass transition temperature exceeding 120°C when being cured at only 80°C or 90°C. Hence, with the use of the resin formulations disclosed herein, high polymer strengths can be achieved with the use of lower curing temperatures. Such high polymer strengths are necessary for repair and maintenance of structures, such as underwater structures, that are exposed to high temperature (above 100°C) and high pressure environments.

The resin formulations disclosed herein also exhibit improved pot life and low toxicity, high water resistance and enhanced adhesion to the substrate, resulting in long-term durability.

Hence, the resin formulations comprising aromatic amine curing agents as disclosed herein have the combined advantageous properties of higher Tg values (and hence higher polymer strength), improved pot life, and superior adhesive and bonding properties when used in underwater environments. The curing agent in the disclosed resin formulations also have reduced tendency to leach during curing.

Additionally, the resin formulations may also contain nanoparticle moisture scavengers that absorb moisture surrounding the resin formulation when the resin formulation is applied to the substrate, hence forming a protective layer which enhances the curing process of the epoxy resin.

The resin formulations disclosed herein can be used to impregnate a fibrous material to form a fibre reinforced composite. The resin formulations disclosed herein offer a more convenient, cost-effective and safe method of application of resin formulations to underwater structure than conventional mechanical clamping methods.

The fibre overwrap having indicia such as fluorescent stripes disposed parallel to the longitudinal axis and at the edge and mid-width of its elongated fibrous material as disclosed herein are also well-suited for use on underwater structures, particularly underwater oil and gas pipelines, because such structures are typically located in environments of low light and visibility. The fluorescent stripes provide a guide for the applicator when wrapping and aligning the fibre overwrap in a helical or spiral path along the length of an underwater structure, hence achieving a 0-50% width overlap which ensures better dimensional stability of the overwrap. The fibre overwrap having fluorescent stripes may furthermore be impregnated with the resin formulations disclosed herein.

## Claims

1. A water curable resin formulation comprising:
(a) an epoxy resin;
(b) an aromatic amine curing agent, wherein the molar ratio of amine functional groups in said curing agent relative to the epoxy functional groups of said epoxy resin is in the range of 7:10 to 9:10, and wherein said aromatic amine curing agent is a monocyclic aromatic amine;
c) a coupling agent comprising a siloxane group coupled to an epoxy reactive group; and
d) a hydrophobic agent capable of repelling water, wherein the hydrophobic agent comprises long-chain polysiloxane groups with more than 50 -Si-O- repeating units, tipically with up to 1000 -Si-O- repeating units.

2. The resin as claimed in claim 1, wherein the molar ratio of amine functional groups in said curing agent relative to the epoxy functional groups of said epoxy resin is 17:20.

3. The resin formulation according to any one of the preceding claims, wherein said aromatic amine curing agent includes a multifunctional amine hardener, wherein said multifunctional amine hardener includes a diamine hardener, and wherein the aromatic diamine hardener includes five and six-member carbons in the aromatic ring.

4. The resin formulation according to any one of the preceding claims, wherein said aromatic amine curing agent includes primary or sec-, ondary amine groups.

5. The resin formulation as claimed in any one of the preceding claims, wherein said curing agent further comprises a cycloaliphatic amine, wherein said cycloaliphatic amine curing agent includes primary or secondary amine groups, and wherein said cycloaliphatic amine curing agent includes a diamine hardener having carbon skeletons of five and six-membered rings.

6. The resin formulation as claimed in any one of the preceding claims, wherein said siloxane group is a hydrolysable siloxane group.

7. The resin formulation as claimed in any one of the preceding claims, wherein said siloxane and epoxy reactive group are coupled by a linker.

8. The resin formulation as claimed in any one of the preceding claims, wherein said coupling agent has between 1 to 5 siloxane groups or one siloxane group.

9. The resin formulation as claimed in any one of claims 7 or 8, wherein said linker has 15 or less carbon atoms per molecule, or 10 or less carbon atoms per molecule.

10. The resin formulation as claimed in any one of the preceding claims, wherein said epoxy reactive group comprises a functional group selected from the group consisting of an oxirane, amine, carboxyl, anhydride, methacrylate and hydroxyl.

11. The resin formulation as claimed in any one of claims 7 to 10, wherein said linker comprises at least one of an aliphatic group and an alkoxy functional group.

12. The resin formulation as claimed in any one of the preceding claims, wherein said epoxy resin is the major component present in an amount in the range of 50% to 90% weight of the total resin.

13. The resin formulation as claimed in any one of claims 5 to 12, wherein said cycloaliphatic amine curing agent is present in an amount in the range of 5 % to 25 % weight of the total resin.

## Patentansprüche

1. Eine wasserhärtbare Harzzubereitung, umfassend:
(a) ein Epoxidharz;
(b) ein aromatisches Amin-Aushärtemittel, wobei das Molverhältnis von Amin-Funktionsgruppen in dem genannten Aushärtemittel bezogen auf die Epoxid-Funktionsgruppen des Epoxidharzes im Bereich von 7:10 bis 9:10 liegt, und wobei das aromatische Amin-Aushärtemittel ein monozyklisches aromatisches Amin ist;
(c) ein Kopplungsmittel umfassend eine Siloxangruppe, die mit einer Epoxidreaktiven Gruppe gekoppelt ist; und
(d) ein wasserabweisendes Mittel, das in der Lage ist, Wasser abzuweisen, wobei das wasserabweisende Mittel langkettige Polysiloxangruppen mit mehr als 50 -Si-O- wiederholenden Einheiten, typischerweise bis zu 1000 -Si-O- wiederholenden Einheiten umfasst.

2. Harzzubereitung gemäß Anspruch 1, wobei das Molverhältnis von Amin-Funktionsgruppen in dem Aushärtemittel bezogen auf die Epoxid-Funktionsgruppen des Epoxidharzes 17:20 beträgt.

3. Harzzubereitung gemäß einem der vorhergehenden Ansprüche, wobei das aromatische Amin-Aushärtemittel einen multifunktionalen Aminhärter beinhaltet, wobei der multifunktionale Aminhärter einen Diaminhärter enthält, und wobei der aromatische Diaminhärter fünf und sechsgliedrige Kohlenstoffatome in dem aromatischen Ring beinhaltet.

4. Harzzubereitung gemäß einem der vorhergehenden Ansprüche, wobei das aromatische Amin-Aushärtemittel primäre oder sekundäre Amingruppen enthält.

5. Harzzubereitung gemäß einem der vorhergehenden Ansprüche, wobei das Aushärtemittel ein cycloaliphatisches Amin umfasst, wobei das cycloaliphatische Amin-Aushärtemittel primäre oder sekundäre Amingruppen beinhaltet, und wobei das cycloaliphatische Amin-Aushärtemittel einen Diaminhärter enthält, der Kohlenstoffgerüste von fünf und sechsgliedrigen Ringen aufweist.

6. Harzzubereitung gemäß einem der vorhergehenden Ansprüche, wobei die Siloxangruppe eine hydrolysierbare Siloxangruppe ist.

7. Harzzubereitung gemäß einem der vorhergehenden Ansprüche, wobei das Siloxan und die Epoxid-reaktive Gruppe durch einen Verbinder gekoppelt sind.

8. Harzzubereitung gemäß einem der vorhergehenden Ansprüche, wobei das Kopplungsmittel zwischen 1 und 5 Siloxangruppen oder eine Siloxangruppe aufweist.

9. Harzzubereitung gemäß einem der Ansprüche 7 oder 8, wobei der Verbinder 15 oder weniger Kohlenstoffatome pro Molekül oder 10 oder weniger Kohlenstoffatome pro Molekül aufweist.

10. Harzzubereitung gemäß einem der vorhergehenden Ansprüche, wobei die Epoxid-reaktive Gruppe eine funktionelle Gruppe umfasst, ausgewählt aus der Gruppe bestehend aus einem Oxiran, Amin, Carboxyl, Anhydrid, Methacrylat und Hydroxyl.

11. Harzzubereitung gemäß einem der Ansprüche 7 bis 10, wobei der Verbinder mindestens eine Gruppe aus einer aliphatischen Gruppe und einer Alkoxy-Funktionsgruppe umfasst.

12. Harzzubereitung nach einem der vorhergehenden Ansprüche, wobei das Epoxidharz die vorliegende Hauptkomponente ist, in einer Menge im Bereich von 50 bis 90 Gewichtsprozent bezogen auf das Gesamtharz.

13. Harzzubereitung gemäß einem der Ansprüche 5 bis 12, wobei das cycloaliphatische Amin-Aushärtemittel in einer Menge im Bereich von 5 bis 25 Gewichtsprozent bezogen auf das Gesamtharz vorliegt.

## Revendications

1. Formulation de résine durcissable à l'eau comprenant :
(a) une résine époxy ;
(b) un agent de durcissement à base d'amine aromatique, le rapport molaire entre les groupes fonctionnels amine dans ledit agent de durcissement et les groupes fonctionnels époxy de ladite résine époxy se situant dans la gamme de 7:10 à 9:10, et ledit agent de durcissement à base d'amine aromatique étant une amine aromatique monocyclique ;
(c) un agent de couplage comprenant un groupe siloxane couplé à un groupe époxy réactif ; et
(d) un agent hydrophobe capable de repousser l'eau, l'agent hydrophobe comprenant des groupes polysiloxane à longue chaîne avec plus de 50 motifs répétitifs -Si-O-, typiquement avec jusqu'à 1000 motifs répétitifs -Si-O-.

2. Résine selon la revendication 1, dans laquelle le rapport molaire entre les groupes fonctionnels amine dans ledit agent de durcissement et les groupes fonctionnels époxy de ladite résine époxy est de 17:20.

3. Formulation de résine selon l'une quelconque des revendications précédentes, dans laquelle ledit agent de durcissement à base d'amine aromatique comporte un durcisseur à base d'amine multifonctionnel, dans laquelle ledit durcisseur à base d'amine multifonctionnel comporte un durcisseur à base de diamine, et dans laquelle le durcisseur à base de diamine aromatique comporte cinq et six carbones cycliques dans le cycle aromatique.

4. Formulation de résine selon l'une quelconque des revendications précédentes, dans laquelle ledit agent de durcissement à base d'amine aromatique comporte des groupes amine primaires ou secondaires.

5. Formulation de résine selon l'une quelconque des revendications précédentes, dans laquelle ledit agent de durcissement comprend en outre une amine cycloaliphatique, dans laquelle ledit agent de durcissement à base d'amine cycloaliphatique comporte des groupes amine primaires ou secondaires, et dans laquelle ledit agent de durcissement à base d'amine cycloaliphatique comporte un durcisseur à base de diamine ayant des squelettes carbonés de cycles à cinq et six chaînons.

6. Formulation de résine selon l'une quelconque des revendications précédentes, dans laquelle ledit groupe siloxane est un groupe siloxane hydrolysable.

7. Formulation de résine selon l'une quelconque des revendications précédentes, dans laquelle ledit groupe siloxane et ledit groupe époxy réactif sont couplés par un groupe de liaison.

8. Formulation de résine selon l'une quelconque des revendications précédentes, dans laquelle ledit agent de couplage a entre 1 et 5 groupes siloxane ou un groupe siloxane.

9. Formulation de résine selon l'une quelconque des revendications 7 et 8, dans laquelle ledit groupe de liaison a 15 atomes de carbone ou moins par molécule, ou 10 atomes de carbone ou moins par molécule.

10. Formulation de résine selon l'une quelconque des revendications précédentes, dans laquelle ledit groupe réactif époxy comprend un groupe fonctionnel choisi dans le groupe constitué par les groupes oxirane, amine, carboxyle, anhydride, méthacrylate et hydroxyle.

11. Formulation de résine selon l'une quelconque des revendications 7 à 10, dans laquelle ledit groupe de liaison comprend un groupe aliphatique et/ou un groupe fonctionnel alcoxy.

12. Formulation de résine selon l'une quelconque des revendications précédentes, dans laquelle ladite résine époxy est le principal constituant présent dans une quantité dans la gamme de 50 % à 90 % en poids de la résine totale.

13. Formulation de résine selon l'une quelconque des revendications 5 à 12, dans laquelle ledit agent de durcissement à base d'amine cycloaliphatique est présent dans une quantité dans la gamme de 5 % à 25 % en poids de la résine totale.
